# EUROPÄISCHE PATENTSCHRIFT

(11) **EP 4 004 529 B1**
(45) Veröffentlichungstag und Bekanntmachung des Hinweises auf die Patenterteilung: **25.12.2024**
(21) Anmeldenummer: 20735494.5
(22) Anmeldetag: 17.06.2020
(51) Int. Cl.: G01N 25/50

(54) **FLAMMPUNKTBESTIMMUNGSAPPARATUR MIT SELEKTIV ABNEHMBARER RÜHREINRICHTUNG UND VERFAHREN EINES DURCHFÜHRENS EINES FLAMMPUNKTBESTIMMUNGSTESTS UND/ODER BRENNPUNKTBESTIMMUNGSTESTS**
FLASH POINT DETERMINATION APPARATUS WITH SELECTIVELY REMOVABLE STIRRING MEANS AND METHOD OF CONDUCTING A FLASH POINT DETERMINATION TEST AND/OR A FIRE POINT DETERMINATION TEST
APPAREIL DE DÉTERMINATION DE POINT D'ÉCLAIR AVEC DES MOYENS D'AGITATION SÉLECTIVEMENT AMOVIBLES ET PROCÉDÉ POUR EFFECTUER UN TEST DE DÉTERMINATION DE POINT D'ÉCLAIR ET/OU UN TEST DE DÉTERMINATION DE POINT D'INFLAMMATION

(30) Priorität: 23.07.2019 DE 102019119918
(43) Veröffentlichungstag der Anmeldung: 01.06.2022
(73) Patentinhaber: Anton Paar ProveTec GmbH, 15827 Blankenfelde-Mahlow (DE)
(72) Erfinder: HEINE, Christian Andreas, 13125 Berlin (DE); SKOLE, Robert, 12527 Berlin (DE); WILLIAMS, Benjamin, 14542 Werder Havel (DE); STRASSER, Florian, 12207 Berlin (DE); TUAEV, Xenia, 12309 Berlin (DE)
(74) Vertreter: Dilg, Haeusler, Schindelmann Patentanwaltsgesellschaft mbH
(86) Internationale Anmeldenummer: PCT/EP2020/066714
(87) Internationale Veröffentlichungsnummer: WO 2021/013436

(56) Entgegenhaltungen:
- CN-U- 206 311 531
- DE-C1- 19 609 413
- US-A- 5 149 194
- US-A1- 2005 128 865
- US-A1- 2007 286 018
- US-A1- 2013 088 934

## Beschreibung

Die Erfindung betrifft ein Verfahren eines Durchführens eines Flammpunktbestimmungstests und/oder Brennpunktbestimmungstests sowie eine Flammpunktbestimmungsapparatur.

Auf dem Gebiet der Flammpunktprüfung werden Flammpunktprüfer zur Bestimmung des Flammpunkts eingesetzt. Der Flammpunkt ist die niedrigste Temperatur einer Probe, bei der die Anwendung einer Zündquelle die Zündung der über der Flüssigkeit gebildeten Dämpfe bewirkt. Dieses Prüfverfahren wird durch zahlreiche Normen bestimmt, zum Beispiel ASTM D93, EN ISO 2719.

Ein entsprechender Flammpunktprüfer dient beispielsweise der Charakterisierung von Brennstoffen (beispielsweise Diesel, Kerosin, Heizöl), Lösemitteln, Schmierölen oder Chemikalien. Zur Bestimmung des Flamm-und/oder Brennpunktes wird eine definierte Menge einer zu untersuchenden Substanz in einen Messtiegel gefüllt, kontrolliert erhitzt und bei Bedarf gerührt. Dabei bildet sich kontinuierlich eine gasförmige Phase über der flüssigen Probe aus. In periodischen Zeit- und/oder Temperaturabständen wird eine Zündquelle in den Tiegel eingeführt oder über den offenen Tiegel bewegt, um das über der flüssigen Probe gebildete Gas-Luft-Gemisch zu zünden. Wird eine Flamme detektiert, deren Brenndauer kürzer als 5 s ist, so ist der Flammpunkt ermittelt. Ist die Brenndauer länger als 5 s, so ist der Brennpunkt der Probe bestimmt.

Zur Flammpunktbestimmung eignen sich unterschiedliche Standardmethoden, zum Beispiel die Methoden nach i) Pensky, ii) Pensky-Martens, iii) Abel, iv) Abel-Pensky, v) Tagliabue und vi) Cleveland.

Es kann wünschenswert oder notwendig sein, dass die Probe bei einer vorgegebenen Drehzahl gerührt werden kann (zum Beispiel bis zu 500 rpm). Dafür kann ein von oben angetriebener Rührer im Tiegeldeckel platziert werden. Die Kupplung zwischen Rührer und dem darüber sitzenden, vertikal bewegbaren Antrieb dient zur Übertragung des Drehmoments. Hierfür ist in einem Probeneinsatz eines solchen Flammpunktprüfers ein Rührer im Tiegeldeckel positioniert, welcher unterhalb der Deckelebene in die Probe eintaucht und oberhalb mechanisch angetrieben wird.

Allgemeiner Stand der Technik ist in CN 206311531 U, DE 19609413 C1, US 2823824 A, DE 29720027 U1, CN 2632672 Y und CN 202075255 U offenbart.

Es ist eine Aufgabe der vorliegenden Erfindung, eine flexibel betreibbare Flammpunktbestimmungsapparatur bereitzustellen.

Diese Aufgabe wird durch die Gegenstände mit den Merkmalen gemäß den unabhängigen Patentansprüchen gelöst. Weitere Ausführungsbeispiele sind in den abhängigen Ansprüchen gezeigt.

Gemäß der vorliegenden Erfindung ist eine Flammpunktbestimmungsapparatur mit einer Rührvorrichtung zum Rühren einer Probe in einem mittels eines Deckels verschließbaren Behälter für einen Flammpunktbestimmungstest und/oder Brennpunktbestimmungstest geschaffen, wobei die Rührvorrichtung eine Rühreinrichtung, die sich zum Rühren der in dem Behälter befindlichen Probe zumindest teilweise durch den Deckel hindurch erstrecken kann, eine zumindest teilweise außerhalb des Deckels anzuordnende Antriebseinrichtung zum Antreiben (insbesondere Drehantreiben) der Rühreinrichtung, eine Kupplungseinrichtung zum Kuppeln der Rühreinrichtung mit der Antriebseinrichtung, und eine derart betätigbare Betätigungseinrichtung aufweist, dass selektiv in einer ersten Betätigungsstellung bei Hochziehen der Antriebseinrichtung der Deckel gemeinsam mit der Rühreinrichtung von dem Behälter abnehmbar ist, oder in einer zweiten Betätigungsstellung bei Hochziehen der Antriebseinrichtung die Antriebseinrichtung von dem Behälter abnehmbar ist und die Rühreinrichtung und der Deckel an dem Behälter verbleiben.

Gemäß der vorliegenden Erfindung ist eine Flammpunktbestimmungsapparatur bereitgestellt, insbesondere auch zur Brennpunktbestimmung ausgebildet, wobei die Flammpunktbestimmungsapparatur einen Behälter zum Aufnehmen einer zu untersuchenden Probe, einen Deckel zum Verschließen des Behälters, und eine Rührvorrichtung mit den oben beschriebenen Merkmalen zum Rühren der Probe in dem mittels des Deckels verschließbaren Behälter aufweist.

Gemäß der vorliegenden Erfindung ist ein Verfahren zum Rühren einer Probe in einem mittels eines Deckels verschlossenen Behälter für einen Flammpunktbestimmungstest und/oder Brennpunktbestimmungstest bereitgestellt, wobei das Verfahren ein zumindest teilweises Hindurchführen einer Rühreinrichtung durch den Deckel hinein in die Probe in dem Behälter zum Rühren der Probe, ein Antreiben (insbesondere Drehantreiben) der Rühreinrichtung mittels einer zumindest teilweise außerhalb des Deckels angeordneten Antriebseinrichtung zum Rühren der Probe mittels der Rühreinrichtung, ein Kuppeln der Rühreinrichtung mit der Antriebseinrichtung mittels einer Kupplungseinrichtung, und ein Betätigen einer Betätigungseinrichtung (bevorzugt, aber nicht zwingend zum Einstellen der Kupplungseinrichtung) derart aufweist, dass selektiv in einer ersten Betätigungsstellung der Betätigungseinrichtung bei Hochziehen der Antriebseinrichtung der Deckel gemeinsam mit der Rühreinrichtung von dem Behälter abgenommen wird, oder in einer zweiten Betätigungsstellung (die von der ersten Betätigungsstellung unterschiedlich sein kann) der Betätigungseinrichtung bei Hochziehen der Antriebseinrichtung die Antriebseinrichtung von dem Behälter abgenommen wird und die Rühreinrichtung und der Deckel an dem Behälter verbleiben.

Im Rahmen der vorliegenden Anmeldung kann unter einer "Rührvorrichtung" eine Apparatur verstanden werden, die mittels einer mit Rührschaufeln versehenen Rührwelle oder dergleichen eine in einem Behälter befindliche Probe rühren kann, indem die Rührwelle oder dergleichen einer Rotationsbewegung unterzogen wird, sodass die Rührschaufeln die Probe in Bewegung setzen. Die Rührwelle oder dergleichen kann mittels einer Antriebseinrichtung, die insbesondere einen Motor aufweisen kann, angetrieben (insbesondere drehangetrieben) werden.

Im Rahmen der vorliegenden Anmeldung kann unter einem "Flammpunktbestimmungstest und/oder Brennpunktbestimmungstest" insbesondere ein Test einer Probe dahingehend verstanden werden, bei welcher Temperatur ein Entflammen der Probe (zum Beispiel für weniger als 5 Sekunden) bzw. ein Brennen der Probe (insbesondere für mehr als 5 Sekunden) einsetzt.

Im Rahmen der vorliegenden Anmeldung kann unter einer "Rühreinrichtung" ein Bauteil verstanden werden, welches das tatsächliche Rühren der Probe in dem Behälter durchführt. Anders ausgedrückt kann die Rühreinrichtung angetrieben, insbesondere drehangetrieben, werden, um mit Rührschaufeln oder dergleichen die Probe in Bewegung zu setzen.

Im Rahmen der vorliegenden Anmeldung kann unter dem Begriff "Antriebseinrichtung" insbesondere ein Bauteil verstanden werden, das auf die Rühreinrichtung dahingehend einwirkt, dass die Antriebseinrichtung die Rühreinrichtung bewegt, insbesondere in Rotation versetzt. Daher kann die Antriebseinrichtung ein bewegliches Element, insbesondere eine Antriebswelle, aufweisen, das zum Beispiel mittels eines Motors drehangetrieben wird, um diese Bewegung auf die Rühreinrichtung zu übertragen.

Im Rahmen der vorliegenden Anmeldung kann unter dem Begriff "Kupplungseinrichtung" insbesondere ein Bauteil verstanden werden, das die Rühreinrichtung mit der Antriebseinrichtung mechanisch kuppelt bzw. entkuppelt. Eine solche Kupplungseinrichtung ermöglicht daher eine Kraftübertragung zwischen der Rühreinrichtung und der Antriebseinrichtung und kann gleichzeitig, in Abhängigkeit von einem Betriebsmodus bzw. einer Betätigungsstellung, eine selektive Kupplung oder Entkupplung bestimmter Komponenten der Rühreinrichtung und der Antriebseinrichtung durchführen.

Im Rahmen der vorliegenden Anmeldung kann unter dem Begriff "Betätigungseinrichtung" eine insbesondere händisch oder manuell von einem Benutzer betätigbare, mittels eines Werkzeugs betätigbare oder automatisch durch eine Steuereinrichtung betätigbare Baugruppe verstanden werden, die in unterschiedliche Betätigungsstellungen gebracht werden kann, um einzustellen, welche Komponenten der Rührvorrichtung bzw. der Flammpunktbestimmungsapparatur miteinander gekuppelt werden sollen und welche Komponenten voneinander entkuppelt werden sollen.

Im Rahmen der vorliegenden Anmeldung kann unter dem Begriff "Flammpunktbestimmungsapparatur" insbesondere eine Apparatur verstanden werden, die zum Durchführen einer Flammpunktbestimmung einer Probe in einem Behälter geeignet bzw. ausgebildet ist. Insbesondere kann eine solche Flammpunktbestimmungsapparatur alternativ oder ergänzend ausgebildet sein, einen Brennpunktbestimmungstest an einer in einem Behälter befindlichen Probe durchzuführen.

Gemäß einem exemplarischen Ausführungsbeispiel der Erfindung ist eine Rührvorrichtung geschaffen, die eine mittels einer Betätigungseinrichtung in unterschiedliche Betriebszustände bringbare Kupplungseinrichtung zwischen einer Rühreinrichtung zum Rühren einer Probe und einer Antriebseinrichtung zum mechanischen Antreiben der Rühreinrichtung aufweist. Indem die Betätigungseinrichtung in intuitiver Weise entweder in eine erste Betätigungsstellung oder in eine zweite Betätigungsstellung gebracht werden kann, kann unter Aufrechterhaltung einer Drehmomentübertragung zwischen der Rühreinrichtung und der Antriebseinrichtung benutzerseitig wahlweise eingestellt werden, ob bei Abnehmen der Antriebseinrichtung von dem Behälter der Deckel der Flammpunktbestimmungsapparatur samt damit verbundener Rühreinrichtung mit abgenommen wird oder nicht. Es kann vorteilhaft sein, beim Abnehmen der Antriebseinrichtung die Rühreinrichtung und den Deckel an dem Behälter befestigt zu belassen, zum Beispiel um eine Flammpunktbestimmung bzw. die Brennpunktbestimmung ungestört zu belassen oder um ein Entweichen von Gasen über der Probe zu vermeiden. In anderen Anwendungen kann es für einen Benutzer jedoch wünschenswert sein, bei Abnehmen der Antriebseinrichtung auch die Rühreinrichtung samt Deckel vom Behälter abzunehmen. Beispielsweise kann dies unter dem Gesichtspunkt vorteilhaft sein, dass in bestimmten Anwendungsszenarien eine Reinigung der Rühreinrichtung wünschenswert sein kann. Gemäß einem Ausführungsbeispiel der Erfindung kann ein Benutzer durch bloßes intuitives Überführen der Betätigungseinrichtung zwischen zwei Betätigungsstellungen zwischen den beiden genannten Betriebsmodi umschalten. Eine weitere Aktivität des Benutzers bzw. einer Steuereinrichtung bedarf es hierfür nicht. Daher ist mit geringem Aufwand, fehlerrobust und auch ohne besondere Spezialkenntnisse wahlweise eine besonders gut reproduzierbare Flammpunktbestimmung bzw. Brennpunktbestimmung ohne die Gefahr des Entweichens von Gasen über der Probe ermöglicht oder aber eine einfache Zugänglichkeit und eine mit geringem Aufwand durchführbare Reinigungsmöglichkeit der Rühreinrichtung.

Alternativ zum Vorsehen einer mittels der Betätigungseinrichtung in unterschiedliche Betriebszustände bringbaren Kupplungseinrichtung kann eine Überführung zwischen den beiden Betriebsmodi auch durch Betätigen einer Verriegelungseinrichtung (zum Beispiel ausgebildet zum selektiven Verriegeln oder Entriegeln von Deckel und Behälter) durch einen Benutzer erfolgen.

Gemäß einem Ausführungsbeispiel der Erfindung ist somit eine mit einer Rührwerkskupplung bzw. Kupplungseinrichtung zusammenwirkende Betätigungseinrichtung (zum Beispiel vorteilhaft aufweisend eine Betätigungshülse) geschaffen, die von oben manuell auf den Rührer bzw. die Rühreinrichtung aufgesetzt bzw. hinuntergedrückt werden kann. Je nach Position der Betätigungseinrichtung (insbesondere besagter Hülse) kann eine Antriebswelle der Antriebseinrichtung am Oberteil der Rühreinrichtung fixiert werden oder nicht. Mit einer solchen Rührwerkskupplung hat der Benutzer also die Wahl zwischen zwei Betriebsmodi (a) und (b), welche zu zwei unterschiedlichen Betätigungsstellungen der Betätigungseinrichtung korrespondieren:
(a) Mitnahme des Behälterdeckels (Tiegeldeckelmitnahme) nach Testende:
   Dies ermöglicht eine einfache, schnelle Reinigung des Deckels ohne komplette Demontage der Rührvorrichtung bzw. der Flammpunktbestimmungsapparatur. So kann der Deckel nach Messende hängend positioniert sein und die Rühreinrichtung frei zum Abwischen der Probenreste zugänglich sein. Mit einem einfachen Handgriff kann der Deckel auf Wunsch vollständig von der Flammpunktbestimmungsapparatur entfernt und separat gereinigt werden. Eine für die Benutzerfreundlichkeit wichtige Funktion der Kupplungsstelle besteht darin, dass der Probendurchsatz signifikant erhöht werden kann, wenn der Deckel des Behälters nach einer Messung durch die Flammpunktbestimmungsapparatur angehoben wird und in eine Position gebracht werden kann, in welcher der untere Teil der Rühreinrichtung von Probenresten leicht gereinigt werden kann.
(b) Keine Abnahme des Deckels vom Behälter nach Testende

Gemäß diesem Betriebszustand bzw. dieser Betätigungsstellung kann der Behälterdeckel auf dem Behälter verbleiben. Dadurch kann eine Belastung durch Probendämpfe zuverlässig vermieden werden, bis aktiv die Entscheidung zur Entnahme des Probeneinsatzes aus der Flammpunktbestimmungsapparatur getroffen wird. Der von dem Deckel geschlossene, befüllte Behälter bzw. Tiegel kann von einem Benutzer nach der Messung aus der Flammpunktbestimmungsapparatur entnommen werden. Der Benutzer kann die Probe entsorgen und den Behälter sowie den Deckel (insbesondere beide Teile eines zweiteiligen Deckels) separat reinigen. Dies kann mit Vorteil unter einem Laborabzug mit einem entsprechenden Lösungsmittel erfolgen.

Im Weiteren werden zusätzliche exemplarische Ausführungsbeispiele der Rührvorrichtung, des Verfahrens und der Flammpunktbestimmungsapparatur beschrieben.

Gemäß einem bevorzugten Ausführungsbeispiel können die Kupplungseinrichtung und die Betätigungseinrichtung miteinander derart zusammenwirkend ausgebildet sein, dass:
- sowohl in der ersten Betätigungsstellung als auch in der zweiten Betätigungsstellung der Betätigungseinrichtung eine Übertragung von Drehmoment von der Antriebseinrichtung auf die Rühreinrichtung zum Rühren der Probe ermöglicht ist; und
in der ersten Betätigungsstellung die Antriebseinrichtung und die Rühreinrichtung miteinander axial voneinander unabnehmbar gekuppelt sind, und in der zweiten Betätigungsstellung die Antriebseinrichtung und die Rühreinrichtung voneinander axial abnehmbar entkuppelt sind.

Dann ist sichergestellt, dass in beiden Betätigungsstellungen eine Drehmomentkopplung von der Antriebseinrichtung auf die Rühreinrichtung ermöglicht ist, aber nur in der ersten Betätigungsstellung ein Abnehmen der Antriebseinrichtung vom Behälter auch zu einem Abnehmen der Rühreinrichtung vom Behälter führt, nicht hingegen in der zweiten Betätigungsstellung.

Gemäß einem Ausführungsbeispiel der Erfindung kann die Kupplungseinrichtung eine der Antriebseinrichtung zugeordnete (insbesondere eine mit der Antriebseinrichtung verbundene oder eine mit der Antriebseinrichtung einstückig gebildete) erste Komponente und eine der Rühreinrichtung zugeordnete (insbesondere eine mit der Rühreinrichtung verbundene oder eine mit der Rühreinrichtung einstückig gebildete) zweite Komponente aufweisen. Bei Ausgestaltung der Kupplungseinrichtung mit zwei Komponenten, von denen die eine zum Beispiel einen Teil der Rühreinrichtung und die andere zum Beispiel einen Teil der Antriebseinrichtung bilden kann, ist die Zahl der zu handhabenden Komponenten beim Montieren oder Demontieren der Rührvorrichtung gering gehalten. Gleichzeitig kann an der Grenze zwischen erster Komponente und zweiter Komponente eine Bauteilentkopplung erfolgen, die bei Abnehmen der Antriebseinrichtung ohne Abnehmen der Rühreinrichtung voneinander getrennt werden. Hingegen können die beiden Komponenten in einem anderen Betriebsmodus, in dem mit Abnehmen der Antriebseinrichtung auch die Rühreinrichtung (insbesondere samt Deckel) abgenommen werden soll, axial fest miteinander verbunden werden.

Gemäß einem Ausführungsbeispiel der Erfindung kann die Kupplungseinrichtung mindestens einen ersten Verriegelungskörper (insbesondere mindestens eine erste Verriegelungskugel, bevorzugt eine erste Kugelreihe) aufweisen, welche die erste Komponente mit der zweiten Komponente (insbesondere drehmomentübertragend) verriegelt, wenn die Betätigungseinrichtung in der ersten Betätigungsstellung auf den mindestens einen ersten Verriegelungskörper einwirkt. Beispielsweise kann der mindestens eine Verriegelungskörper als eine umfängliche Anordnung mehrerer Verriegelungskugeln ausgebildet sein, die durch die Betätigungseinrichtung (zum Beispiel einen innenseitigen Überstand an der Betätigungseinrichtung) verriegelnd betätigbar ist, wenn die Betätigungseinrichtung in der ersten Betätigungsstellung befindlich ist. Dann bewerkstelligt der mindestens eine erste Verriegelungskörper eine drehmomentübertragende und axial feste Verbindung zwischen den beiden Komponenten und somit zwischen Rühreinrichtung und Antriebseinrichtung.

Gemäß einem Ausführungsbeispiel der Erfindung kann der mindestens eine erste Verriegelungskörper die erste Komponente und die zweite Komponente entriegeln bzw. freigegeben, wenn die Betätigungseinrichtung in der zweiten Betätigungsstellung ist und den mindestens einen ersten Verriegelungskörper freigibt. Befindet sich somit die Betätigungseinrichtung in der zweiten Betätigungsstellung, so kann der oben beschriebene Überstand oder dergleichen an einer Innenseite der zum Beispiel hülsenförmigen oder manschettenförmigen Betätigungseinrichtung den mindestens einen ersten Verriegelungskörper freigeben, womit eine Abnehmbarkeit der Antriebseinrichtung von der Rühreinrichtung durch axiale Trennbarkeit der beiden Komponenten der Kupplungseinrichtung ermöglicht wird.

Gemäß einem Ausführungsbeispiel der Erfindung kann die Kupplungseinrichtung einen Mitnehmer zum selektiven Drehmomentübertragen zwischen der ersten Komponente und der zweiten Komponente aufweisen. Besagter Mitnehmer kann von der Rühreinrichtung und der Antriebseinrichtung separat vorgesehen sein. Zum Beispiel kann der Mitnehmer in die zweite Komponente eingesetzt werden. Indem die Kupplungseinrichtung aus nur drei Hauptkomponenten (nämlich der ersten Komponente, der zweiten Komponente und dem Mitnehmer) gefertigt werden kann (gegebenenfalls unter Implementierung von einem oder mehreren Verriegelungskörpern), sind eine einfache Herstellung und ein fehlerrobuster Betrieb sichergestellt.

Gemäß einem Ausführungsbeispiel der Erfindung kann die Kupplungseinrichtung mindestens einen zweiten Verriegelungskörper (insbesondere mindestens eine zweite Verriegelungskugel, beispielsweise eine zweite Kugelreihe) aufweisen, der auf den Mitnehmer, insbesondere drehmomentübertragend, einwirkt, wenn die Betätigungseinrichtung in der zweiten Betätigungsstellung auf den mindestens einen zweiten Verriegelungskörper einwirkt. Beispielsweise kann der mindestens eine zweite Verriegelungskörper als eine zweite Reihe von Verriegelungskugeln ausgebildet sein, die in Umfangsrichtung angeordnet sein können und sich weiter weg vom Behälter entfernt befinden können als die erste Kugelreihe. Ist die Antriebseinrichtung an der Rühreinrichtung montiert, kann ein Drehantrieb der Rühreinrichtung durch die Antriebseinrichtung ermöglicht werden. Wird hingegen die Antriebseinrichtung abgenommen, kann aufgrund des nun entriegelten mindestens einen ersten Verriegelungskörpers die Antriebseinrichtung abgenommen werden, ohne dass die Rühreinrichtung samt Deckel von dem Behälter entnommen werden.

Gemäß einem Ausführungsbeispiel der Erfindung wirkt der mindestens eine zweite Verriegelungskörper nicht auf den Mitnehmer ein, wenn die Betätigungseinrichtung in der ersten Betätigungsstellung ist und den mindestens einen zweiten Verriegelungskörper freigibt. Befindet sich die Betätigungseinrichtung in der ersten Betätigungsstellung, wirkt der mindestens eine zweite Verriegelungskörper auf den Mitnehmer nicht ein. Die drehmomentübertragende Kopplung zwischen Antriebseinrichtung und Rühreinrichtung kann in diesem Fall über den mindestens einen nun verriegelten ersten Verriegelungskörper erfolgen. Ein Drehantreiben der Rühreinrichtung durch die Antriebseinrichtung ist dadurch in der ersten Betätigungsstellung ebenso ermöglicht wie ein gemeinsames Abnehmen der Antriebseinrichtung und der Rühreinrichtung aus dem Behälter.

Gemäß einem Ausführungsbeispiel der Erfindung kann die zweite Komponente ein sich verjüngendes Außenprofil und die erste Komponente ein sich verjüngendes Innenprofil zum Aufnehmen des sich verjüngenden Außenprofils aufweisen. Die beiden zueinander korrespondierenden Profile von erster Komponente und zweiter Komponente dienen beim Verbinden zwischen der ersten Komponente und der zweiten Komponente der Kupplungseinrichtung anschaulich als mechanische Führung. Dies vereinfacht es für einen Benutzer, die Kupplungseinrichtung in einen gekuppelten Zustand zu überführen.

Gemäß einem Ausführungsbeispiel der Erfindung kann das sich verjüngende Außenprofil eine (insbesondere umlaufende) Vertiefung zur Aufnahme des mindestens einen ersten Verriegelungskörpers aufweisen. Zum Beispiel kann die Vertiefung als Ringnut ausgebildet sein, die zum Beispiel mehrere umfängliche Vertiefungen zwischen Verbindungsstegen aufweist, so dass ein jeweiliger erster Verriegelungskörper in eine jeweilige Vertiefung eingeführt werden kann.

Gemäß einem Ausführungsbeispiel der Erfindung kann das sich verjüngende Innenprofil eine (insbesondere umlaufende) Vertiefung zur Aufnahme des mindestens einen zweiten Verriegelungskörpers aufweisen. Die Vertiefung am Innenprofil kann ähnlich ausgestaltet sein wie die Vertiefung am Außenprofil.

Gemäß einem Ausführungsbeispiel der Erfindung kann die zweite Komponente eine zentrale bzw. achsnahe Aussparung zum Aufnehmen zumindest eines Teils des Mitnehmers aufweisen. Indem der Mitnehmer zentrumsnah in einer entsprechenden Aussparung der zweiten Komponente untergebracht werden kann, ist eine platzsparende und kompakte Konfiguration ermöglicht.

Gemäß einem Ausführungsbeispiel der Erfindung kann die Betätigungseinrichtung als die Kupplungseinrichtung zumindest teilweise umgebende Hülse oder Manschette ausgebildet sein oder eine solche Hülse oder Manschette aufweisen. Die Hülse bzw. Manschette kann zusätzlich zumindest teilweise die Rühreinrichtung und/oder die Antriebseinrichtung umgeben. Anschaulich weist die Hülse bzw. Manschette also ein Durchgangsloch auf, in dem zumindest ein Teil der Kupplungseinrichtung, und optional ein Teil von Rühreinrichtung und/oder Antriebseinrichtung aufgenommen sein kann. Wenn die Betätigungseinrichtung eine Hülse aufweist, kann diese zum einen die darin aufgenommene Kupplungseinrichtung vor mechanischen Einwirkungen und Schmutz aus der Umgebung schützen. Zum anderen ist es dann ermöglicht, dass ein Benutzer durch bloßes intuitives Betätigen der hülsenförmigen Betätigungseinrichtung die Rührvorrichtung zwischen der ersten und der zweiten Betätigungsstellung in einfacher Weise überführen kann.

Gemäß einem Ausführungsbeispiel der Erfindung kann die Hülse zum Überführen zwischen der ersten Betätigungsstellung und der zweiten Betätigungsstellung axial verschiebbar ausgebildet sein. Dies kann insbesondere derart erfolgen, dass die Hülse zum Überführen von der ersten Betätigungsstellung in die zweite Betätigungsstellung in Richtung der Antriebseinrichtung und zum Überführen von der zweiten Betätigungsstellung in die erste Betätigungsstellung in Richtung der Rühreinrichtung zu verschieben ist. Somit ist es zur Überführung der Betätigungseinrichtung zwischen den beiden Betätigungsstellungen ausreichend, dass ein Benutzer in besonders intuitiver Weise die Hülse entlang einer axialen Erstreckungsrichtung der Rührvorrichtung nach oben oder nach unten verschiebt. Zum Beispiel kann eine Hülsenstellung "unten" der ersten Betätigungsstellung entsprechen, wohingegen eine Hülsenstellung "oben" der zweiten Betätigungsstellung entsprechen kann.

Gemäß einem Ausführungsbeispiel der Erfindung kann die Hülse mindestens einen innenseitigen Überstand zum Einwirken auf die Kupplungseinrichtung aufweisen. Es ist auch möglich, dass der mindestens eine innenseitige Überstand zum Einwirken auf den mindestens einen ersten Verriegelungskörper und/oder den mindestens einen zweiten Verriegelungskörper ausgebildet ist. Beispielsweise kann ein solcher innenseitiger Überstand in Umfangsrichtung durchgehend oder unterbrochen ausgebildet sein. Mit Vorteil kann der innenseitige Überstand in der ersten Betätigungsstellung auf den mindestens einen ersten Verriegelungskörper und in der zweiten Betätigungsstellung auf den mindestens einen zweiten Verriegelungskörper einwirken. Auf diese Weise kann der mindestens eine innenseitige Überstand der Hülse in der ersten Betätigungsstellung sowohl eine Drehmomentkopplung zwischen Antriebseinrichtung und Rühreinrichtung als auch eine axiale Kopplung zwischen Antriebseinrichtung und Rühreinrichtung bewirken. Ferner kann in der zweiten Betätigungsstellung der mindestens eine innenseitige Überstand der Hülse nur eine Drehmomentkopplung zwischen Antriebseinrichtung und Rühreinrichtung bewerkstelligen, Antriebseinrichtung und Rühreinrichtung aber axial ungekuppelt belassen.

Gemäß einem Ausführungsbeispiel der Erfindung kann die Betätigungseinrichtung zur manuellen, insbesondere einhändigen, Betätigung durch einen Benutzer ausgebildet sein. Gemäß einem Ausführungsbeispiel der Erfindung kann das Verfahren ein einhändiges Betätigen der Betätigungseinrichtung zum Einstellen der Kupplungseinrichtung durch einen Benutzer aufweisen. Somit kann es einem Benutzer ermöglicht sein, mit nur einer Hand die Betätigungseinrichtung zwischen den beiden Betätigungsstellungen zu überführen. Daher hat der Benutzer die andere Hand frei, um andere Tätigkeiten während der Bedienung der Rührvorrichtung bzw. der Flammpunktbestimmungsarchitektur durchzuführen. Dies ermöglicht eine einfache und fehlerrobuste Handhabung der Rührvorrichtung.

Gemäß einem Ausführungsbeispiel der Erfindung kann die Kupplungseinrichtung mindestens einen (insbesondere mit einer Vorspannkraft beaufschlagbaren) Verriegelungskörper zum (insbesondere drehmomentübertragenden) Verriegeln der ersten Komponente mit der zweiten Komponente aufweisen. Ferner kann die Betätigungseinrichtung mindestens ein Betätigungselement (insbesondere mindestens eine Betätigungsschraube) aufweisen. Dieses kann zum Verriegeln des mindestens einen Verriegelungskörpers durch Anbringen des mindestens einen Verriegelungskörpers an zumindest einer der ersten Komponente und der zweiten Komponente in der ersten Betätigungsstellung ausgebildet sein. Ferner kann das mindestens eine Betätigungselement zum Entriegeln des mindestens einen Verriegelungskörpers durch Entfernen des mindestens einen Verriegelungskörpers von der ersten Komponente und/oder der zweiten Komponente in der zweiten Betätigungsstellung ausgebildet sein. Gemäß der beschriebenen alternativen Ausgestaltung ist eine besonders einfache Kupplungseinrichtung geschaffen, die dennoch ein Überführen der Rührvorrichtung zwischen den beiden Betätigungsstellungen und den zugehörigen Funktionalitäten ermöglicht. Ein oder mehrere Verriegelungskörper, zum Beispiel Verriegelungskugeln, können zum Beispiel mittels einer mechanischen Feder oder mittels einer Magnetkraft mit einer Vorspannkraft beaufschlagt werden. Es kann dann ausreichend sein, ein Betätigungselement (zum Beispiel eine jeweilige Schraube) in eine Aussparung einer Komponente der Kupplungseinrichtung einzuführen, um den oder die Verriegelungskörper in Eingriff mit einer Nut einer Komponente der Kupplungseinrichtung zu bringen. Dadurch können die Komponenten der Kupplungseinrichtung miteinander gekoppelt werden und als Ergebnis davon auch die Rühreinrichtung und die Antriebseinrichtung miteinander gekoppelt werden. Wünscht ein Benutzer eine Kopplung zwischen den beiden Komponenten der Kupplungseinrichtung bzw. zwischen Antriebseinrichtung und Rühreinrichtung nicht, so wird das Betätigungselement aus der entsprechenden Aufnahme herausgeschraubt. Auch dadurch ist eine einfache Überführung zwischen den beiden Betätigungsstellungen ermöglicht.

In einer alternativen oder ergänzenden Ausführungsform kann das Betätigungselement eine Verriegelungseinrichtung (insbesondere einen Riegel) aufweisen, die manuell von einem Benutzer oder alternativ in automatisierter Weise wahlweise in die erste Betätigungsstellung oder in die zweite Betätigungsstellung bringbar ist, zum Beispiel zwischen der ersten Betätigungsstellung und der zweiten Betätigungsstellung verschiebbar ist. Ein solcher Riegel kann zum Beispiel in der Nähe des Tiegeldeckels positioniert sein und kann vom Benutzer in eine Stellung gebracht werden, in welcher der Riegel den Deckel am Behälter verriegelt und somit die Tiegeldeckelmitnahme verhindert. In diesem Fall ist es entbehrlich, dass der Benutzer Schrauben betätigt. Die Verriegelungseinrichtung kann zum Beispiel als mechanische Verriegelungseinrichtung ausgebildet sein, beispielsweise als verschiebbarer Riegel und/oder als Klammer. Eine solche mechanische Verriegelungseinrichtung kann auch mit einem Vorspannelement, beispielsweise einer mechanischen Feder, in eine bestimmte Position vorgespannt werden. Es ist aber auch möglich, die Verriegelungseinrichtung als magnetische Verriegelungseinrichtung auszubilden, die mittels einer magnetischen Kraft eine Verriegelung bzw. Entriegelung vornimmt. Die selektive Verriegelung mittels des Verriegelungselements kann insbesondere zwischen Behälter und Deckel erfolgen, oder auf die Kupplungseinrichtung wirken.

Gemäß einem Ausführungsbeispiel der Erfindung kann die Flammpunktbestimmungsapparatur eine Temperiereinrichtung zum Temperieren der in dem Behälter befindlichen Probe aufweisen. Mittels Temperierens der Probe kann die Flammpunktbestimmung bzw. Brennpunktbestimmung in einfacher und präziser Weise durchgeführt werden.

Gemäß einem Ausführungsbeispiel der Erfindung kann die Flammpunktbestimmungsapparatur eine Zündvorrichtung zum Zünden der Probe aufweisen. Die Zündvorrichtung kann ein Zünden der entflammbaren bzw. brennbaren Probe bewirken. Vorzugsweise reicht die Zündvorrichtung bis in das Innere des Behälters hinein, weiter vorzugsweise bis oberhalb einer Flüssigkeitsoberfläche der Probe.

Gemäß einem Ausführungsbeispiel der Erfindung kann die Rühreinrichtung fest an dem Deckel befestigt sein. Durch Befestigung der Rühreinrichtung am Deckel (zum Beispiel durch Verschrauben) kann sichergestellt werden, dass beim Abnehmen der Rühreinrichtung auch der Deckel mitgenommen wird. Ein separates Entfernen des Deckels von der Rühreinrichtung ist dadurch entbehrlich.

Ferner kann die Flammpunktbestimmungsarchitektur eine Temperatursonde zum Ermitteln der Temperatur der Probe bzw. des Inneren des Behälters haben. Eine solche Temperatursonde kann Sensordaten aus dem Behälterinneren liefern, die für die Ermittlung des Brennpunkts bzw. Flammpunkts der Probe dienlich sein können.

Beispielsweise können durch Ausführungsformen der vorliegenden Erfindung folgende Normen für Flammpunktprüfer unterstützt werden: ASTM D93, DIN EN ISO 2719, GB/T261, IP 34, JIS K 2265, ISO 13736, ISO 1516, ISO 1523, DIN 51755-1 (Abel-Pensky mit entsprechendem Zubehör); ASTM D56, ASTM D3934, ASTM D3941; ASTM D92, DIN EN ISO 2592, IP 36, IP 403. Andere Ausführungsformen der vorliegenden Erfindung können weiteren, hier nicht aufgeführten Normen entsprechen.

Im Folgenden werden exemplarische Ausführungsbeispiele der vorliegenden Erfindung mit Verweis auf die folgenden Figuren detailliert beschrieben.
Figur 1 zeigt eine Querschnittsansicht einer Flammpunktbestimmungsapparatur gemäß einem exemplarischen Ausführungsbeispiel der Erfindung.
Figur 2 zeigt eine Querschnittsansicht eines Teils einer Flammpunktbestimmungsapparatur gemäß einem anderen exemplarischen Ausführungsbeispiel der Erfindung in einer ersten Betätigungsstellung.
Figur 3 zeigt eine Querschnittsansicht des Teils der Flammpunktbestimmungsapparatur gemäß Figur 2 in einer zweiten Betätigungsstellung.
Figur 4 zeigt eine Explosionsdarstellung einer Kupplungseinrichtung der Flammpunktbestimmungsapparatur gemäß Figur 2 und Figur 3.
Figur 5 zeigt eine dreidimensionale Ansicht der Flammpunktbestimmungsapparatur entsprechend Figur 2 bis Figur 4.
Figur 6 zeigt eine Querschnittsansicht einer Flammpunktbestimmungsapparatur gemäß einem anderen exemplarischen Ausführungsbeispiel der Erfindung in einem montierten Zustand.
Figur 7 zeigt eine dreidimensionale Ansicht der Flammpunktbestimmungsapparatur gemäß Figur 6 in einem demontierten Zustand.

Gleiche oder ähnliche Komponenten in unterschiedlichen Figuren sind mit gleichen Bezugsziffern versehen.

Bevor bezugnehmend auf die Figuren exemplarische Ausführungsbeispiele der Erfindung beschrieben werden, sollen noch einige allgemeine Aspekte der Erfindung und der zugrundeliegenden Technologien erläutert werden:
Gemäß einem exemplarischen Ausführungsbeispiel der Erfindung kann eine Flammpunktbestimmungsapparatur bzw. eine Flammpunktmesstechnik bereitgestellt werden, welche die Möglichkeit eröffnen, vor der Messung aktiv zu entscheiden, ob ein Behälterdeckel bzw. Tiegeldeckel nach dem Messende von einem Kopf bzw. dem Geräteteil, in welchem sich die Antriebsvorrichtung befindet, mit angehoben werden soll oder auf dem Behälter bzw. Tiegel verbleiben soll.

Eine herkömmliche Ausführungsform koppelt den Kopf mit dem Probeneinsatz bei jedem Aufsetzen auf den Tiegel und verbleibt in Folge gekoppelt. In anderen herkömmlichen Ausführungsformen bleiben Kopf und Probeneinsatz immer entkoppelt. Nach Testende wird der Deckel immer vom Kopf mitgenommen und wird in eine gekippte Position gebracht. Hierbei können Probenreste vom Rührwerk sich in Richtung einer Deckelöffnung bewegen und den Deckel zusätzlich verunreinigen. Eine Entkopplung des Tiegeldeckels mit einem Handgriff (wie gemäß einem exemplarischen Ausführungsbeispiel der Erfindung) ist nicht möglich, da zusätzlich zu einem umständlichen Lösen der Kupplung noch alle angeschlossenen Kabel (insbesondere Zündungs-, Detektorkabel, etc.) separat getrennt werden müssen, bevor der Deckel von der Flammpunktbestimmungsapparatur gelöst werden kann.

Eine andere herkömmliche Ausführungsform ermöglicht eine Deckelablösung gar nicht. Das Bauteil ist fest mit dem Kopf verbunden.

Mit dem Zusammenwirken von Kupplungseinrichtung und Betätigungseinrichtung einer Rührvorrichtung gemäß einem exemplarischen Ausführungsbeispiel der Erfindung können insbesondere folgende Vorteile erreicht werden:
Bei Wahl einer ersten Betätigungsstellung zum Bewirken einer Tiegeldeckelmitnahme nach Testende kann eine einfache, schnelle Reinigung des Deckels ohne komplette Demontage erreicht werden. Insbesondere kann der Deckel nach Messende hängend positioniert werden. Dann ist die Rühreinrichtung frei zum Abwischen der Probenreste zugänglich. Durch einen einfachen Handgriff kann der Deckel auf Wunsch vollständig von der Flammpunktbestimmungsapparatur entfernt werden.

Bei Wahl einer anderen zweiten Betätigungsstellung zum Verbleiben des Tiegeldeckels auf dem Tiegel kann die Probe wirksam vor Verunreinigung geschützt werden. Ferner kann die Umgebung vor Probendämpfen geschützt werden, bis aktiv eine Entnahme des Probeneinsatzes aus der Flammpunktbestimmungsapparatur getroffen wird. Zum Beispiel kann eine Messung beaufsichtigt gestartet werden, unbeaufsichtigt beendet werden und eine Entscheidung zur Probeneinsatzentfernung erst später getroffen werden (zum Beispiel erst Stunden später). Die Umgebung und die Probe verbleiben geschützt.

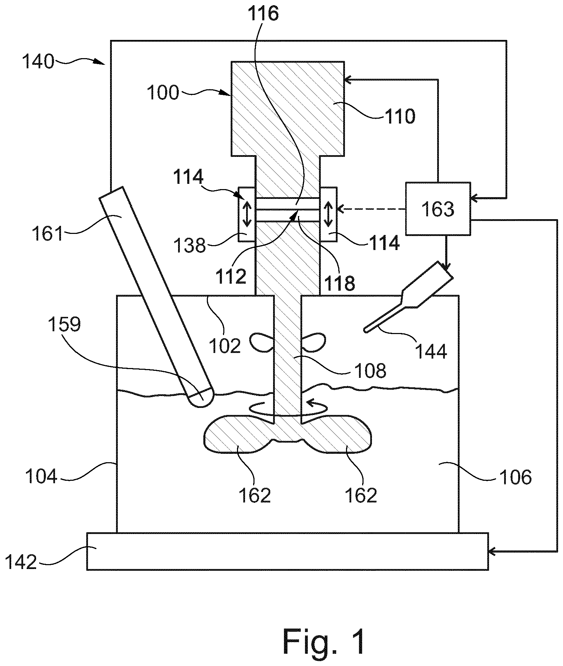

**Figur 1** zeigt eine Querschnittsansicht einer Flammpunktbestimmungsapparatur 140 gemäß einem exemplarischen Ausführungsbeispiel der Erfindung, mit der wahlweise eine Flammpunktbestimmung oder eine Brennpunktbestimmung durchgeführt werden kann.

Die Flammpunktbestimmungsapparatur 140 weist einen Tiegel oder Behälter 104 zum Aufnehmen einer zu untersuchenden flüssigen Probe 106 (zum Beispiel Diesel) auf. Ein von dem Behälter 104 abnehmbarer Deckel 102 dient zum Verschließen des Behälters 104 während der Messung.

Eine Rührvorrichtung 100 ist zum Rühren der Probe 106 in dem mittels des Deckels 102 verschließbaren Behälter 104 vorgesehen.

Der Behälter 104 ist thermisch mit einer Temperiereinrichtung 142 zum Temperieren (insbesondere Heizen) der in dem Behälter 104 befindlichen Probe 106 gekoppelt, wobei die thermische Kopplung direkt oder indirekt über einen hier nicht dargestellten Luftspalt zwischen der Temperiereinrichtung 142 und dem Behälter 104 erfolgen kann. Mittels der Temperiereinrichtung 142 kann die Probe 106 auf eine gewünschte Temperatur gebracht werden.

Ferner ist eine Zündvorrichtung 144 zum Zünden des über der Probe 106 gebildeten Gas-Luft-Probengemisches in den Behälter 104 eingeführt.

Gemäß Figur 1 kann eine Rühreinrichtung 108 der Rührvorrichtung 100 fest an dem Deckel 102 befestigt sein.

Besagte Rührvorrichtung 100 der Flammpunktbestimmungsapparatur 140 dient zum Rühren der Probe 106, die in den mit dem abnehmbaren Deckel 102 verschlossenen Behälter 104 eingefüllt ist. Für einen Flammpunktbestimmungstest bzw. einen Brennpunktbestimmungstest kann es wünschenswert oder erforderlich sein, die Probe 106 zu rühren. Die Rührvorrichtung 100 weist hierfür eine Rühreinrichtung 108 in einem gemäß Figur 1 unteren Bereich der Rührvorrichtung 100 auf. Die Rühreinrichtung 108 erstreckt sich zum Rühren der in dem Behälter 104 befindlichen Probe 106 teilweise durch den Deckel 102 hindurch, d.h. ist teilweise oberhalb und teilweise unterhalb des Deckels 102 angeordnet.

Ferner weist die Rührvorrichtung 100 eine gemäß Figur 1 außerhalb des Deckels 102 angeordnete Antriebseinrichtung 110 zum Antreiben der Rühreinrichtung 108 auf. Die Antriebseinrichtung 100 kann einen Motor (nicht gezeigt) aufweisen, der eine Antriebswelle der Antriebseinrichtung 110 dreht. Durch Kraftübertragung von der Antriebseinrichtung 110 auf die Rühreinrichtung 108 kann auch die Rühreinrichtung 108 zum Drehen gebracht werden, wodurch die Probe 106 gerührt wird.

Eine Kupplungseinrichtung 112 der Rührvorrichtung 100 fungiert selektiv bzw. wahlweise zum mechanischen Kuppeln der Rühreinrichtung 108 mit der Antriebseinrichtung 110 oder zum mechanischen Entkuppeln der Rühreinrichtung 108 von der Antriebseinrichtung 110.

Darüber hinaus enthält die Rührvorrichtung 100 eine Betätigungseinrichtung 114, die zum Einstellen der Kupplungseinrichtung 112 betätigbar und hierfür in vertikaler Richtung verschiebbar ist, wie mit Doppelpfeilen dargestellt ist. Die Betätigungseinrichtung 114 kann selektiv in eine erste Betätigungsstellung gebracht werden, in der bei Hochziehen der Antriebseinrichtung 110 der Deckel 102 gemeinsam mit der Rühreinrichtung 108 von dem Behälter 104 abgenommen werden kann. In einer zweiten Betätigungsstellung der Betätigungseinrichtung 114 hingegen kann bei Hochziehen der Antriebseinrichtung 110 die Antriebseinrichtung 110 von dem Behälter 104 abgenommen werden, wohingegen aber die Rühreinrichtung 108 und der Deckel 102 an dem Behälter 104 verbleiben.

Die in Figur 1 in einer Schnittansicht dargestellte Flammpunktbestimmungsapparatur 140, welche insbesondere auch zur Brennpunktbestimmung ausgebildet ist, umfasst also den Behälter 104 zum Aufnehmen der zu untersuchenden Probe 106, die in flüssigem Zustand vorliegt. Ferner umfasst die Flammpunktbestimmungsapparatur 140 die Temperiereinrichtung 142 zum Temperieren der in dem Behälter 104 befindlichen Probe 106. Die Flammpunktbestimmungsapparatur 140 umfasst ferner die Zündvorrichtung 144, die zum Zünden des über der Probe 106 gebildeten Gas-Luft-Gemisches vorgesehen ist. Die Rührvorrichtung 100 dient dem Rühren der Probe 106. Ferner ist ein Flammpunkt- und Temperaturdetektor 161 mit Temperatursonde 159 bereitgestellt, die bis in den flüssigen Teil der Probe 106 hineinragt.

Zur Flammpunktbestimmung bzw. Brennpunktbestimmung wird die Probe 106 im Behälter 104 mittels der Temperiereinrichtung 142 aufgeheizt. Mittels der Temperatursonde 159 kann die Temperatur der Probe 106 im Behälter 104 erfasst werden. Durch Drehantreiben von Rührschaufeln 162 am behälterseitigen Ende der Rühreinrichtung 108 kann die Probe 106 in Bewegung versetzt werden. Mittels der Zündeinrichtung 144 kann eine Entzündung generiert werden, um den Flamm- oder Brennpunkt des über der Probe 106 gebildeten Gas-Luft-Gemisches zu bestimmen.

Die Steuerung der Flammpunktbestimmungsapparatur 140 erfolgt mittels einer Steuereinrichtung 163 (zum Beispiel ein Prozessor). Die Steuereinrichtung 163 steuert die Antriebseinrichtung 110, die Zündeinrichtung 144 und die Temperiereinrichtung 142. Ferner kann die Steuereinrichtung 163 Signale des Flammpunkt- und Temperaturdetektors 161 erhalten und verarbeiten. Optional kann die Steuereinrichtung 163 die Betätigungseinrichtung 114 betätigen, obgleich diese Handlung in bevorzugten Ausführungsbeispielen von einem Benutzer durchgeführt wird.

Um einzustellen, ob beim Abnehmen der Antriebseinrichtung 110 vom Behälter 104 der Deckel 102 samt Rühreinrichtung 108 abgenommen werden kann oder nicht, ist es ausreichend, dass ein Benutzer händisch die hülsenartige Betätigungseinrichtung 114 nach oben bzw. nach unten schiebt. Befindet sich die Hülse 138 in einer ersten Betätigungsstellung, kann eine erste Komponente 116 einer Kupplungseinrichtung 112, welche erste Komponente 116 an die Antriebseinrichtung 110 angeschlossen ist, von einer an der Rühreinrichtung 108 angebrachten zweiten Komponente 118 der Kupplungseinrichtung 112 nicht entkoppelt werden. Ein Herausziehen der Antriebseinrichtung 110 zieht auch die Rühreinrichtung 108 samt Deckel 102 nach oben ab und ermöglicht dann ein Reinigen des Rührwerks. Ist hingegen die Betätigungseinrichtung 114 durch axiales Verschieben der Hülse 138 in die zweite Betätigungsstellung geschoben, werden die erste Komponente 116 und die zweite Komponente 118 voneinander entkoppelt. Ein Abziehen der Antriebseinrichtung 110 belässt dann die Rühreinrichtung 108 samt Deckel 102 am Behälter 104.

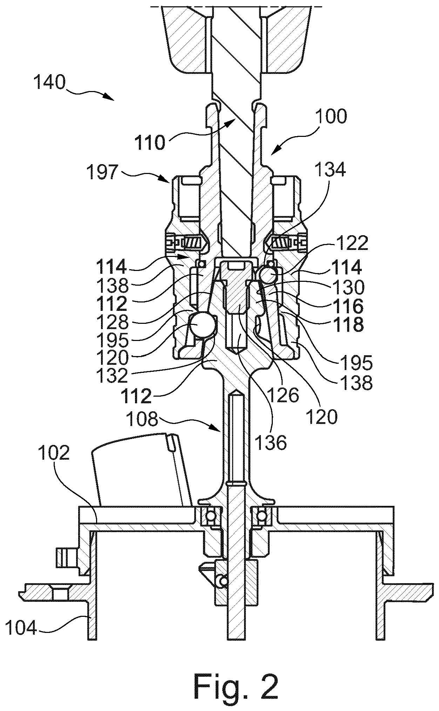

Ein Beispiel für eine entsprechende mechanische Lösung wird im Weiteren detaillierter bezugnehmend auf Figur 2 bis Figur 5 beschrieben:

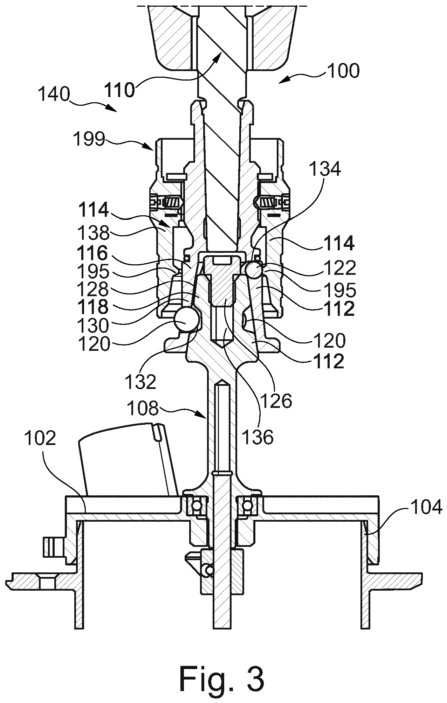

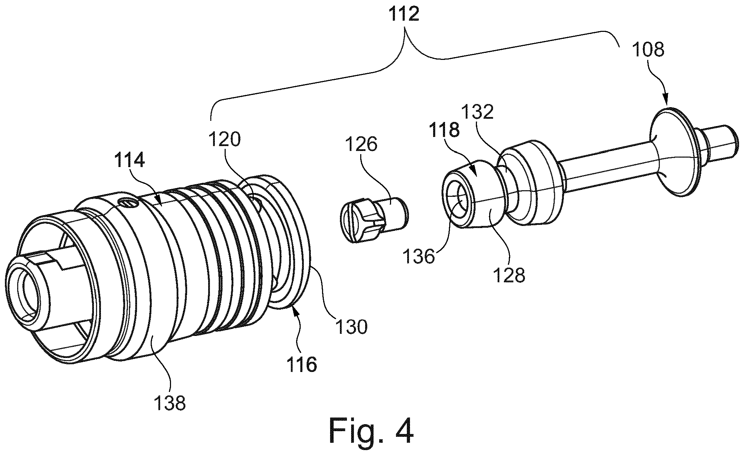

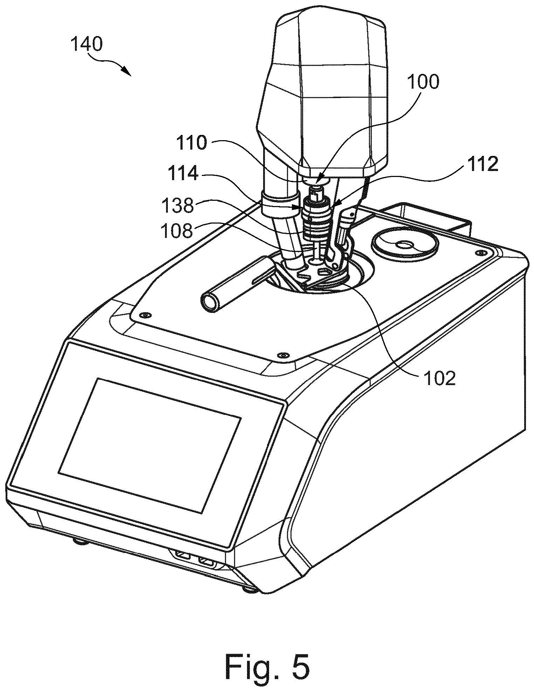

**Figur 2** zeigt eine Querschnittsansicht eines Teils einer Flammpunktbestimmungsapparatur 140 gemäß einem exemplarischen Ausführungsbeispiel der Erfindung in einer ersten Betätigungsstellung 197. **Figur 3** zeigt eine Querschnittsansicht des besagten Teils der Flammpunktbestimmungsapparatur 140 gemäß Figur 2 in einer zweiten Betätigungsstellung 199. **Figur 4** zeigt eine Explosionsdarstellung einer Kupplungseinrichtung 112 samt Mitnehmer 126 der Flammpunktbestimmungsapparatur 140 gemäß Figur 2 und Figur 3 und zeigt darüber hinaus weitere Komponenten (insbesondere eine Rührwelle einer Rühreinrichtung 108 und eine Hülse 138 einer Betätigungseinrichtung 114). **Figur 5** zeigt eine dreidimensionale Ansicht der Flammpunktbestimmungsapparatur 140.

Auch gemäß Figur 2 bis Figur 5 weist die Rührvorrichtung 100 eine Rühreinrichtung 108, eine Antriebseinrichtung 110, eine Kupplungseinrichtung 112 und eine Betätigungseinrichtung 114 zum Betätigen der Kupplungseinrichtung 112 derart auf, dass selektiv die in Figur 2 gezeigte erste Betätigungsstellung 197 (zum Abnehmen des Deckels 102 samt Rühreinrichtung 108 gemeinsam mit der Antriebseinrichtung 110) oder die in Figur 3 dargestellte zweite Betätigungsstellung 199 (zum Abnehmen der Antriebseinrichtung 110 ohne Deckel 102 und ohne Rühreinrichtung 108) eingestellt werden kann.

Wie in Figur 2 bis Figur 4 zu erkennen ist, hat die Kupplungseinrichtung 112 eine der Antriebseinrichtung 110 zugeordnete und mit dieser einstückig gebildete erste Komponente 116 und eine der Rühreinrichtung 108 zugeordnete und mit dieser einstückig gebildete zweite Komponente 118.

Darüber hinaus enthält die Kupplungseinrichtung 112 als eine umlaufende Reihe erster Verriegelungskugeln ausgebildete erste Verriegelungskörper 120, welche die erste Komponente 116 mit der zweiten Komponente 118 drehmomentübertragend verriegeln, wenn die Betätigungseinrichtung 114 in der ersten Betätigungsstellung 197 auf die ersten Verriegelungskörper 120 einwirkt. Die ersten Verriegelungskörper 120 lassen hingegen die erste Komponente 116 und die zweite Komponente 118 voneinander entkuppelt, wenn die Betätigungseinrichtung 114 in der zweiten Betätigungsstellung 199 ist und die ersten Verriegelungskörper 120 freigibt.

Überdies enthält die Kupplungseinrichtung 112 einen Mitnehmer 126 zum selektiven Drehmomentübertragen zwischen der ersten Komponente 116 und der zweiten Komponente 118 in der zweiten Betätigungsstellung 199. Der Mitnehmer 126 ist in diesem Beispiel von der Rühreinrichtung 108 und der Antriebseinrichtung 110 separat vorgesehen. Alternativ kann der Mitnehmer 126 auch Teil der Rühreinrichtung 108 sein.

Die Kupplungseinrichtung 112 hat zusätzlich als eine umlaufende Reihe zweiter Verriegelungskugeln ausgebildete zweite Verriegelungskörper 122, welche auf den Mitnehmer 126 drehmomentübertragend einwirken können, wenn die Betätigungseinrichtung 114 in der zweiten Betätigungsstellung 199 auf die zweiten Verriegelungskörper 122 einwirkt. Hingegen wirken die zweiten Verriegelungskörper 122 nicht auf den Mitnehmer 126 ein, wenn die Betätigungseinrichtung 114 in der ersten Betätigungsstellung 197 ist und die zweiten Verriegelungskörper 122 freigibt.

Wie in Figur 2 und Figur 3 zu erkennen, befindet sich die umlaufende Reihe erster Verriegelungskugeln in Form der ersten Verriegelungskörper 120 unterhalb der umlaufenden Reihe zweiter Verriegelungskugeln in Form der zweiten Verriegelungskörper 122. Anders ausgedrückt sind die ersten Verriegelungskörper 120 rührerseitig und die zweiten Verriegelungskörper 122 antriebsseitig angeordnet.

Wie ebenfalls in Figur 2 bis Figur 4 erkennbar ist, hat die zweite Komponente 118 ein sich antriebsseitig verjüngendes Außenprofil 128 und hat die erste Komponente 116 ein dazu korrespondierendes, sich ebenfalls antriebsseitig verjüngendes Innenprofil 130 zum Aufnehmen des sich verjüngenden Außenprofils 128. Das sich verjüngende Außenprofil 128 hat eine umlaufende, Vertiefung 132 zur Aufnahme der ersten Verriegelungskörper 120. In entsprechender Weise hat das sich verjüngende Innenprofil 130 eine umlaufende Vertiefung 134 zur Aufnahme der zweiten Verriegelungskörper 122. Überdies weist die zweite Komponente 118 eine zentrale Aussparung 136 zum Aufnehmen des Mitnehmers 126 auf.

Wie in Figur 2 und Figur 3 gut zu erkennen ist, ist die Betätigungseinrichtung 114 als eine die Kupplungseinrichtung 112 umfänglich umgebende Manschette oder Hülse 138 ausgebildet, die zusätzlich einen Teil der Rühreinrichtung 108 und einen Teil der Antriebseinrichtung 110 umgeben kann. Besagte Hülse 138 fungiert zum Überführen der Rührvorrichtung 100 zwischen der ersten Betätigungsstellung 197 und der zweiten Betätigungsstellung 199 und ist zu diesem Zweck axial verschiebbar ausgebildet. Die Hülse 138 kann zum Überführen von der ersten Betätigungsstellung 197 in die zweite Betätigungsstellung 199 in Richtung der Antriebseinrichtung 110 geschoben werden bzw. zum Überführen von der zweiten Betätigungsstellung 199 in die erste Betätigungsstellung 197 in Richtung der Rühreinrichtung 108 verschoben werden. Die Betätigungseinrichtung 114 ist zur manuellen und vorteilhaft einhändigen Betätigung durch einen Benutzer ausgebildet.

Die Hülse 138 ist mit einem innenseitigen Überstand 195 zum Einwirken auf die Kupplungseinrichtung 112 versehen. Genauer gesagt kann der Überstand 195 in der ersten Betätigungsstellung 197 auf die ersten Verriegelungskörper 120, nicht aber auf die zweiten Verriegelungskörper 122, einwirken. Hingegen kann der Überstand 195 in der zweiten Betätigungsstellung 199 auf die zweiten Verriegelungskörper 122, nicht aber auf die ersten Verriegelungskörper 120, einwirken.

Das Ausführungsbeispiel gemäß Figur 2 bis Figur 5 schafft anschaulich eine Rührerkupplung eines Flammpunktprüfers nach Pensky und Pensky-Martens. Die Flammpunktbestimmungsapparatur 140 enthält eine Rührerkupplung, welche die grundsätzliche Funktionalität des Rührens und die benutzerfreundliche und flexible Option zur Abnahme des Deckels 102 bei Abnahme der Rührvorrichtung 100 (auch als Tiegeldeckelmitnahme bezeichnet) vereint. Die Rührvorrichtung 100 enthält eine Kupplungseinrichtung 112, umfassend einen Mitnehmer 126 zur Drehmomentübertragung. Der Mitnehmer 126 kann mit der Rührerwelle der Rühreinrichtung 108 verschraubt sein. Alternativ kann der Mitnehmer 126 aber auch in die Rührerwelle integriert sein. Die Rührvorrichtung 100 ist in einem der ersten Betätigungsstellung 197 entsprechenden, gekoppelten (siehe Figur 2) und einem der zweiten Betätigungsstellung 199 entsprechenden, nicht gekoppelten (vergleiche Figur 3) Zustand von Antriebseinrichtung 110 und Rühreinrichtung 108 jeweils als Längsschnitt dargestellt. Figur 4 zeigt Bestandteile der Schnittstelle bzw. Kupplungseinrichtung 112.

Ein Benutzer kann eine manuelle Optionswahl vornehmen und eine durchgeführte oder verhinderte Tiegeldeckelmitnahme einstellen, indem lediglich die Hülse 138 der Betätigungseinrichtung 114 nach oben bzw. nach unten verschoben wird. Mit einer Verschiebung "nach oben" bzw. "nach unten" ist dabei eine Verschiebung in axialer Richtung gemeint. "Oben" und "unten" bezeichnen also Richtungen zu einem Zeitpunkt, während dessen sich die Flammpunktbestimmungsapparatur 140 in Betrieb befindet.

Die Rührerkupplung kann sowohl komplett sichtbar (siehe beispielsweise Figur 5) als auch teils unsichtbar in der Flammpunktbestimmungsapparatur 140 verbaut werden. Figur 5 zeigt daher ein Einbaubeispiel der Baugruppe Rührerkupplung bzw. der Rührvorrichtung 100. Vorzugsweise wird die Kupplungsstelle so positioniert, dass sie leicht zugänglich ist, um die Option der Tiegeldeckelmitnahme einfach aktivieren und deaktivieren zu können.

Die Wahl der Option der Tiegeldeckelmitnahme ist im dargestellten Beispiel einhändig durchführbar, sobald die Kupplungseinrichtung 112 an der Rührvorrichtung 100 direkt befestigt wird. Die äußere Hülse 138 kann vor dem Start der Flammpunktmessung manuell heruntergedrückt werden, d.h. in die erste Betätigungsstellung 197 überführt werden. Dies ist einhändig durchführbar. Dabei wird die untere Kugelreihe der ersten Verriegelungskörper 120 der Kupplungseinrichtung 112 durch die Hülse 138 zur Drehmitte hin arretiert. Dadurch werden die abgesetzte Rührerwelle in die Kegelaufnahme der Kupplungseinrichtung 112 und die Verriegelungskörper 120 in eine Kegelnut gedrückt. Der entstandene Kraftschluss zwischen den Komponenten 116, 118, 120 der Kupplungseinrichtung 112 bewirkt eine Drehmomentübertragung auf die Rühreinrichtung 108 und ermöglicht zusätzlich eine Mitnahme des Deckels 102 des Behälters 104 durch den Gerätekopf. Die Kupplung bleibt in diesem Zustand, bis manuell die Hülse 138 wieder nach oben geschoben wird, d.h. in die zweite Betätigungsstellung 199 überführt wird. In diesem Fall wird die untere Kugelreihe der ersten Verriegelungskörper 120 gelöst und die obere Kugelreihe der zweiten Verriegelungskörper 122 wiederum zur Drehmitte hin arretiert. Die Drehmomentübertragung erfolgt dann sobald eine arretierte Kugel gegen den Mitnehmer 126 stößt und die Drehbewegung auf die Rührerwelle überträgt. Da der Kraftschluss zwischen den Komponenten 116, 118, 120 der Kupplungseinrichtung 112 aufgehoben ist, wird in diesem Zustand der Deckel 102 des Tiegels bzw. Behälters 104 beim Hochfahren des Kopfes nicht mitgenommen.

Ist die Hülse 138 in der unteren Position (Figur 2), so werden die Kugeln der ersten Verriegelungskörper 120 in die Ausnehmung bzw. Vertiefung 132 gedrückt und die Welle wird am Oberteil der Flammpunktbestimmungsapparatur 140 fixiert. Der Deckel 102 wird beim Hochfahren mitgenommen.

Befindet sich die Hülse 138 hingegen in der oberen Position (Figur 3), werden die Kugeln der ersten Verriegelungskörper 120 freigegeben und die Kugeln der zweiten Verriegelungskörper 122 fixiert. Letzteres sorgt für eine Kraftübertragung zum Mitnehmer 126 im Zentrum der Flammpunktbestimmungsapparatur 140. Im Falle des Hochziehens bleibt der Deckel 102 dann auf dem Behälter 104 liegen. Diese einfach zu bedienende, optionale Deckelmitnahme stellt einen signifikanten Vorteil eines Ausführungsbeispiels der Erfindung dar.

Befindet sich also die Hülse 138 in der Stellung gemäß Figur 2, kann durch Abnehmen der Antriebseinrichtung 110 auch die Rühreinrichtung 108 samt Deckel 102 vom Behälter 104 abgenommen werden, um die Rühreinrichtung 108 zu reinigen. In der Stellung gemäß Figur 3 ist hingegen ein Abnehmen der Antriebseinrichtung 110 ohne Mitnahme der Rühreinrichtung 108 ermöglicht. Wie in Figur 5 gezeigt, ist für das Überführen der Flammpunktbestimmungsapparatur 140 zwischen den beiden Betätigungsstellungen 197, 199 gemäß Figur 2 und Figur 3 ausreichend, die Hülse 138 in Axialrichtung zu verschieben.

Die in Figur 2 bis Figur 5 dargestellte Rührvorrichtung 100 bietet einem Benutzer eine komfortable Bedienungsmöglichkeit, indem der Benutzer durch bloßes Auf- und Ab-Bewegen der Hülse 138 auswählen kann, ob die Rühreinrichtung 108 und die Antriebseinrichtung 110 gemeinsam vom Behälter 104 abgenommen werden können (Betriebszustand gemäß Figur 2) oder die Antriebseinrichtung 110 alleine vom Behälter 104 abgenommen werden kann, während die Rühreinrichtung 108 am Behälter 104 verbleibt (Betriebszustand gemäß Figur 3). Diese Funktionsweise wird durch das Zusammenspiel der Verriegelungskörper 120, 122 und des Mitnehmers 126 bewirkt, wobei auf die genannten Bauteile durch bloßes vertikales Verschieben der Hülse 138 in entsprechender Weise eingewirkt werden kann. Die als Verriegelungskugeln ausgebildeten unteren bzw. ersten Verriegelungskörper 120 bewirken einen Kraftschluss, wenn die Hülse 138 nach unten verschoben ist (vergleiche Figur 2). In diesem Betriebszustand sind die oberen bzw. zweiten Verriegelungskörper 122 frei bewegbar und funktional ohne Bedeutung. Durch die auch in diesem Betriebszustand geschaffene Drehmomentkopplung zwischen Rühreinrichtung 108 und Antriebseinrichtung 110 ist ein Rühren ermöglicht, wobei der Deckel 102 beim Abnehmen des Kopfes der Rührvorrichtung 100 und damit der Antriebseinrichtung 110 mitgenommen wird. Wenn die Hülse 138 gemäß Figur 3 nach oben verschoben ist, werden die oberen bzw. zweiten Verriegelungskörper 122 arretiert und nehmen die Nase bzw. den Mitnehmer 126 mit. Die unteren bzw. ersten Verriegelungskörper 120 sind in diesem Betriebszustand funktional ohne Bedeutung. Im axial ungekoppelten Zustand zwischen Rühreinrichtung 108 und Antriebseinrichtung 110 bleibt somit eine Drehmomentkopplung zwischen Rühreinrichtung 108 und Antriebseinrichtung 110 immer noch ermöglicht, und somit ist ein Rühren ungeachtet der axialen Entkupplung zwischen Rühreinrichtung 108 und Antriebseinrichtung 110 möglich. Somit bleibt sowohl im ungekuppelten Zustand zwischen Rühreinrichtung 108 und Antriebseinrichtung 110 gemäß Figur 3 als auch im gekuppelten Zustand zwischen Rühreinrichtung 108 und Antriebseinrichtung 110 gemäß Figur 2 eine Drehmomentübertragung zum Rühren ermöglicht. Anschaulich bewirkt die obere Kugelreihe in Form der zweiten Verriegelungskörper 122 einen Formschluss, wohingegen die untere Kugelreihe in Form der ersten Verriegelungskörper 120 für einen Kraftschluss beim Rühren sorgt. Der Mitnehmer 126 gestattet eine Drehmomentübertragung auf die Rührerwelle durch die zweiten Verriegelungskörper 122, wenn die Hülse 138 zum Mitnehmen des Mitnehmers 126 nach oben geschoben ist. Befindet sich die Hülse 138 im unteren Zustand, kann durch die ersten Verriegelungskörper 120 ein Kraftschluss bewerkstelligt werden.

Durch das beschriebene Zusammenwirken der Kupplungseinrichtung 112 und der Betätigungseinrichtung 114 erfolgt sowohl in der ersten Betätigungsstellung 197 als auch in der zweiten Betätigungsstellung 199 eine Übertragung von Drehmoment von der Antriebseinrichtung 110 auf die Rühreinrichtung 108, womit in beiden Betätigungsstellungen 197, 199 ein Rühren ermöglicht ist. Hingegen sind nur in der ersten Betätigungsstellung 197 die Antriebseinrichtung 110 und die Rühreinrichtung 108 miteinander axial voneinander unabnehmbar gekuppelt. In der zweiten Betätigungsstellung 199 hingegen sind die Antriebseinrichtung 110 und die Rühreinrichtung 108 voneinander axial abnehmbar entkuppelt.

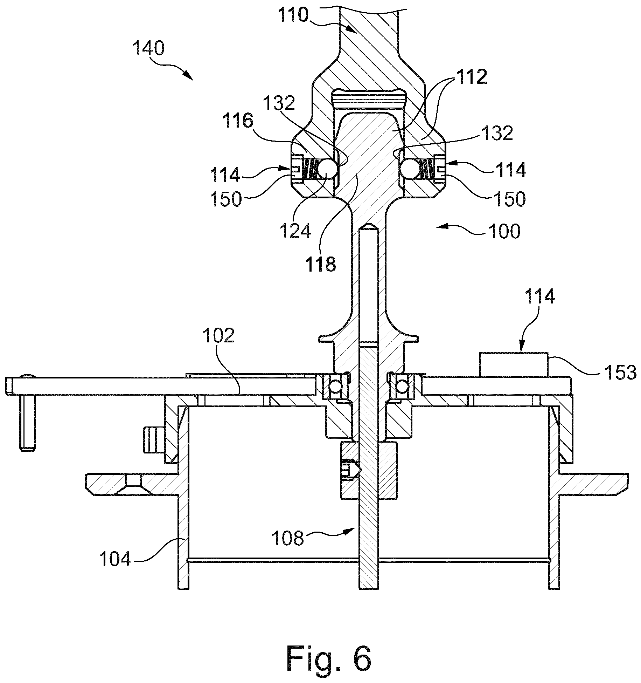

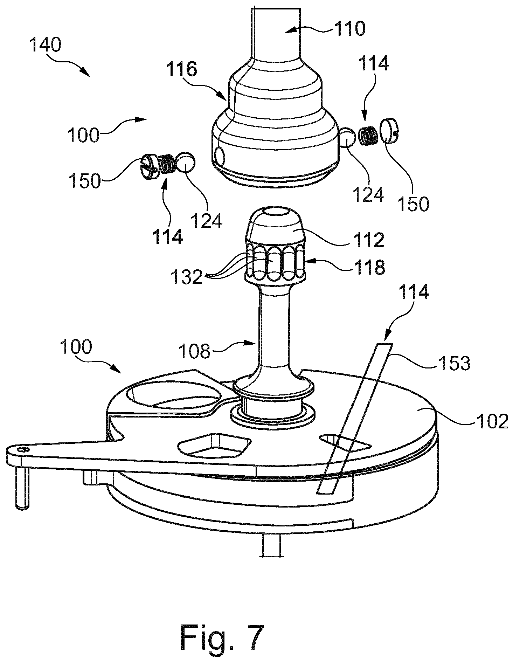

**Figur 6** zeigt eine Querschnittsansicht einer Flammpunktbestimmungsapparatur 140 gemäß einem anderen exemplarischen Ausführungsbeispiel der Erfindung in einem montierten Zustand. **Figur 7** zeigt eine dreidimensionale Ansicht der Flammpunktbestimmungsapparatur 140 gemäß Figur 6 in einem demontierten Zustand.

Gemäß Figur 6 und Figur 7 hat die Kupplungseinrichtung 112 mit einer Vorspannkraft beaufschlagbare Verriegelungskörper 124 zum drehmomentübertragenden Verriegeln der ersten Komponente 116 mit der zweiten Komponente 118. Darüber hinaus weist die Betätigungseinrichtung 114 gemäß Figur 6 und Figur 7 Betätigungselemente 150 (hier ausgebildet als Betätigungsschrauben) auf. Diese dienen zum Verriegeln der Verriegelungskörper 124 durch Anbringen der Verriegelungskörper 124 an der ersten Komponente 116 und der zweiten Komponente 118 in der ersten Betätigungsstellung 197. Ein Entriegeln der Verriegelungskörper 124 erfolgt durch Entfernen der Verriegelungskörper 124 von der ersten Komponente 116 bzw. der zweiten Komponente 118 in der zweiten Betätigungsstellung 199.

Das Betätigungselement 114 kann alternativ als Verriegelungselement 153 mit einem Riegel ausgeführt sein, der vom Benutzer in eine Stellung gebracht werden kann, in der er den Deckel verriegelt und somit die Tiegeldeckelmitnahme verhindert. In diesem Fall hat der Benutzer keine Schrauben zu betätigen.

Somit veranschaulichen Figur 6 und Figur 7 ein Ausführungsbeispiel mit einer automatischen Tiegeldeckelmitnahme, die aber mittels der Betätigungselemente 150 und/oder der Tiegeldeckelverriegelung abgeschaltet bzw. deaktiviert werden kann.

Bei einer solchen automatisierten Mitnahme des Deckels 102 des Behälters 104 kuppelt die Flammpunktbestimmungsapparatur 140 automatsch den Tiegeldeckel 102 mit der Antriebseinrichtung 110. Bei dem dargestellten Ausführungsbeispiel verläuft die Kupplung des Kopfes mit dem Probeneinsatz automatisch. Ferner kann das Entkoppeln des Deckels 102 durch ein einfaches Hinunterziehen stattfinden, ohne Bauteile der Kupplung noch zusätzlich entriegeln und/oder bewegen zu müssen. Solch eine Kopplung kann durch eine federbelastete Kugelreihe in Form der Verriegelungskörper 124 im Zusammenwirken mit den Betätigungselementen 150 realisiert werden. Bei der automatischen Tiegeldeckelmitnahme befindet sich besagte federbelastete Kugelreihe in der Antriebswelle. Diese drückt sich bei Kopplung in Langlochnuten der Rührerwelle und überträgt das Antriebsmoment auf den Rührer. Weiterhin kann dadurch die automatische Tiegeldeckelmitnahme durch den Gerätekopf bzw. den Geräteteil, in welchem sich die Antriebseinrichtung 110 befindet, ermöglicht werden. Die federbelastete Kugelreihe verhindert ein Herausrutschen der Rührerwelle sowie des Deckels 102 und führt diese beim Hochfahren des Gerätekopfes mit. Insbesondere zeigt Figur 6 einen Querschnitt der Kupplung zur automatisierten Tiegeldeckelmitnahme.

Das Ausführungsbeispiel gemäß Figur 6 und Figur 7 erlaubt ein einfaches Verbinden der Komponenten 116, 118 durch Einsetzen der Verriegelungskörper 124 sowie der als Schraubenfedern ausgebildeten Vorspannelemente durch Betätigen des als Betätigungsschraube ausgebildeten Betätigungselements 150. Ist das Betätigungselement 150 in eine Aufnahmeöffnung der ersten Komponente 116 eingeschraubt, drückt eine jeweilige Verriegelungskugel als Verriegelungskörper 124 in eine Aussparung der zweiten Komponente 118. Dadurch werden die Komponenten 116, 118 aneinander verriegelt. Ein Abnehmen der Antriebseinrichtung 110 führt dann auch zu einem Mitnehmen der Rühreinrichtung 108. Ist hingegen das als Betätigungsschraube ausgebildete Betätigungselement 150 nicht in der Aufnahme der ersten Komponente 116 verschraubt, drückt die Verriegelungskugel 124 auch nicht in die Nut der zweiten Komponente 118. Ein Abnehmen der Antriebseinrichtung 110 belässt dann die Rühreinrichtung 108 am Behälter 104.

Figur 7 zeigt noch, dass in Umfangsrichtung die Vertiefung 132 an der zweiten Komponente 118 als Abfolge von in Umfangsrichtung angeordneten Vertiefungen mit dazwischen angeordneten Stegen ausgebildet ist. Ein als Verriegelungskugel ausgebildeter Verriegelungskörper 124 kann dann in eine beliebige Vertiefung eingeführt werden, um die beiden Komponenten 116, 118 miteinander zu verbinden.

Mit Bezugszeichen 153 ist in Figur 6 und Figur 7 eine optionale Verriegelungseinrichtung 153 der Betätigungseinrichtung 114 dargestellt. Durch Betätigung der Verriegelungseinrichtung 153 durch einen Benutzer kann selektiv der Deckel 102 am Behälter 104 verriegelt werden, um eine Tiegeldeckelmitnahme zu verunmöglichen, oder kann der Deckel 102 gegenüber dem Behälter 104 entriegelt werden, um eine Tiegeldeckelmitnahme zu ermöglichen. Beispielsweise kann die Verriegelungseinrichtung 153 als mechanischer oder magnetischer Riegel ausgebildet sein.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Flammpunktbestimmungsapparatur (140), insbesondere auch zur Brennpunktbestimmung ausgebildet, wobei die Flammpunktbestimmungsapparatur (140) aufweist:
einen Behälter (104) zum Aufnehmen einer zu untersuchenden Probe (106);
einen Deckel (102) zum Verschließen des Behälters (104); und
eine Rührvorrichtung (100) zum Rühren der Probe (106) in dem mittels des Deckels (102) verschließbaren Behälter (104) für einen Flammpunktbestimmungstest und/oder Brennpunktbestimmungstest, wobei die Rührvorrichtung (100) aufweist:
eine Rühreinrichtung (108), die sich zum Rühren der in dem Behälter (104) befindlichen Probe (106) zumindest teilweise durch den Deckel (102) hindurch erstrecken kann;
eine zumindest teilweise außerhalb des Deckels (102) anzuordnende Antriebseinrichtung (110) zum Antreiben, insbesondere Drehantreiben, der Rühreinrichtung (108);
eine Kupplungseinrichtung (112) zum Kuppeln der Rühreinrichtung (108) mit der Antriebseinrichtung (110); und wobei die Flammpunktbestimmungsapparatur dadurch gekennzeicht ist, dass sie
eine, zum Einstellen der Kupplungseinrichtung (112), derart betätigbare Betätigungseinrichtung (114) aufweist, dass selektiv:
in einer ersten Betätigungsstellung (197) bei Hochziehen der Antriebseinrichtung (110) der Deckel (102) gemeinsam mit der Rühreinrichtung (108) von dem Behälter (104) abnehmbar ist; oder
in einer zweiten Betätigungsstellung (199) bei Hochziehen der Antriebseinrichtung (110) die Antriebseinrichtung (110) von dem Behälter (104) abnehmbar ist und die Rühreinrichtung (108) und der Deckel (102) an dem Behälter (104) verbleiben.

2. Flammpunktbestimmungsapparatur (140) gemäß Anspruch 1, wobei die Kupplungseinrichtung (112) eine der Antriebseinrichtung (110) zugeordnete, insbesondere eine mit der Antriebseinrichtung (110) verbundene oder eine mit der Antriebseinrichtung (110) einstückig gebildete, erste Komponente (116) und eine der Rühreinrichtung (108) zugeordnete, insbesondere eine mit der Rühreinrichtung (108) verbundene oder eine mit der Rühreinrichtung (108) einstückig gebildete, zweite Komponente (118) aufweist.

3. Flammpunktbestimmungsapparatur (140) gemäß Anspruch 2, wobei die Kupplungseinrichtung (112) mindestens einen ersten Verriegelungskörper (120), insbesondere mindestens eine erste Verriegelungskugel und weiter insbesondere eine erste Reihe von Verriegelungskugeln, aufweist, wobei der mindestens eine erste Verriegelungskörper (120) die erste Komponente (116) mit der zweiten Komponente (118), insbesondere drehmomentübertragend, verriegelt, wenn die Betätigungseinrichtung (114) in der ersten Betätigungsstellung (197) auf den mindestens einen ersten Verriegelungskörper (120) einwirkt,
wobei der mindestens eine erste Verriegelungskörper (120) die erste Komponente (116) und die zweite Komponente (118) insbesondere entriegelt belässt, wenn die Betätigungseinrichtung (114) in der zweiten Betätigungsstellung (199) ist und den mindestens einen ersten Verriegelungskörper (120) freigibt.

4. Flammpunktbestimmungsapparatur (140) gemäß einem der Ansprüche 2 oder 3, wobei die Kupplungseinrichtung (112) einen Mitnehmer (126) zum selektiven Drehmomentübertragen zwischen der ersten Komponente (116) und der zweiten Komponente (118) aufweist, wobei insbesondere der Mitnehmer (126) von der Rühreinrichtung (108) und der Antriebseinrichtung (110) separat vorgesehen ist.

5. Flammpunktbestimmungsapparatur (140) gemäß Anspruch 4, wobei die Kupplungseinrichtung (112) mindestens einen zweiten Verriegelungskörper (122), insbesondere mindestens eine zweite Verriegelungskugel und weiter insbesondere eine zweite Reihe von Verriegelungskugeln, aufweist, wobei der mindestens eine zweite Verriegelungskörper (122) auf den Mitnehmer (126), insbesondere drehmomentübertragend, einwirkt, wenn die Betätigungseinrichtung (114) in der zweiten Betätigungsstellung (199) auf den mindestens einen zweiten Verriegelungskörper (122) einwirkt,
wobei der mindestens eine zweite Verriegelungskörper (122) insbesondere nicht auf den Mitnehmer (126) einwirkt, wenn die Betätigungseinrichtung (114) in der ersten Betätigungsstellung (197) ist und den mindestens einen zweiten Verriegelungskörper (122) freigibt.

6. Flammpunktbestimmungsapparatur (140) gemäß einem der Ansprüche 2 bis 5, wobei die zweite Komponente (118) ein sich verjüngendes Außenprofil (128) und die erste Komponente (116) ein sich verjüngendes Innenprofil (130) zum Aufnehmen des sich verjüngenden Außenprofils (128) aufweist,
wobei das sich verjüngende Außenprofil (128) insbesondere eine, weiter insbesondere umlaufende, Vertiefung (132) zur Aufnahme des mindestens einen ersten Verriegelungskörpers (120) aufweist.

7. Flammpunktbestimmungsapparatur (140) gemäß Anspruch 6, wobei das sich verjüngende Innenprofil (130) eine, insbesondere umlaufende, Vertiefung (134) zur Aufnahme des mindestens einen zweiten Verriegelungskörpers (122) aufweist.

8. Flammpunktbestimmungsapparatur (140) gemäß einem der Ansprüche 4 bis 7, wobei die zweite Komponente (118) eine zentrale Aussparung (136) zum Aufnehmen zumindest eines Teils des Mitnehmers (126) aufweist.

9. Flammpunktbestimmungsapparatur (140) gemäß einem der Ansprüche 1 bis 8, wobei die Betätigungseinrichtung (114) eine die Kupplungseinrichtung (112) zumindest teilweise umgebende Hülse (138) aufweist, insbesondere zusätzlich zumindest teilweise umgebend die Rühreinrichtung (108) und/oder die Antriebseinrichtung (110),
wobei die Hülse (138) zum Überführen zwischen der ersten Betätigungsstellung (197) und der zweiten Betätigungsstellung (199) insbesondere axial verschiebbar ausgebildet ist, ferner insbesondere derart, dass die Hülse (138) zum Überführen von der ersten Betätigungsstellung (197) in die zweite Betätigungsstellung (199) von der Rühreinrichtung (108) weg und zum Überführen von der zweiten Betätigungsstellung (199) in die erste Betätigungsstellung (197) zu der Rühreinrichtung (108) hin zu verschieben ist.

10. Flammpunktbestimmungsapparatur (140) gemäß Anspruch 9, wobei die Hülse (138) mindestens einen innenseitigen Überstand (195) zum Einwirken auf den mindestens einen ersten Verriegelungskörper (120) und/oder den mindestens einen zweiten Verriegelungskörper (122) und/oder die Kupplungseinrichtung (112) aufweist.

11. Flammpunktbestimmungsapparatur (140) gemäß Anspruch 2, wobei die Kupplungseinrichtung (112) mindestens einen, insbesondere mit einer Vorspannkraft beaufschlagbaren, Verriegelungskörper (124) zum, insbesondere drehmomentübertragenden, Verriegeln der ersten Komponente (116) mit der zweiten Komponente (118) aufweist;
wobei die Betätigungseinrichtung (114) mindestens ein Betätigungselement (150), insbesondere mindestens eine Betätigungsschraube, aufweist, wobei das mindestens eine Betätigungselement (150) zum Verriegeln des mindestens einen Verriegelungskörpers (124) durch Anbringen des mindestens einen Verriegelungskörpers (124) an zumindest einer der ersten Komponente (116) und der zweiten Komponente (118) in der ersten Betätigungsstellung (197) und zum Entriegeln des mindestens einen Verriegelungskörpers (124) durch Entfernen des mindestens einen Verriegelungskörpers (124) von der ersten Komponente (116) und/oder der zweiten Komponente (118) in der zweiten Betätigungsstellung (197) ausgebildet ist.

12. Flammpunktbestimmungsapparatur (140) gemäß Anspruch 2, wobei die Betätigungseinrichtung (114) eine Verriegelungseinrichtung (153) aufweist, die, insbesondere manuell von einem Benutzer oder alternativ in automatisierter Weise, wahlweise in die erste Betätigungsstellung (197) oder in die zweite Betätigungsstellung (199) bringbar ist, insbesondere zwischen der ersten Betätigungsstellung (197) und der zweiten Betätigungsstellung (199) verschiebbar ist.

13. Flammpunktbestimmungsapparatur (140) gemäß einen der Ansprüche 1 bis 12, wobei die Kupplungseinrichtung (112) und die Betätigungseinrichtung (114) miteinander derart zusammenwirkend ausgebildet sind, dass:
sowohl in der ersten Betätigungsstellung (197) als auch in der zweiten Betätigungsstellung (199) eine Übertragung von Drehmoment von der Antriebseinrichtung (110) auf die Rühreinrichtung (108) ermöglicht ist; und in der ersten Betätigungsstellung (197) die Antriebseinrichtung (110) und die Rühreinrichtung (108) miteinander axial voneinander unabnehmbar gekuppelt sind und in der zweiten Betätigungsstellung (199) die Antriebseinrichtung (110) und die Rühreinrichtung (108) voneinander axial abnehmbar entkuppelt sind.

14. Flammpunktbestimmungsapparatur (140) gemäß einem der vorangehenden Ansprüche, aufweisend:
eine Temperiereinrichtung (142) zum Temperieren der in dem Behälter (104) befindlichen Probe (106); und/oder
eine Zündvorrichtung (144) zum Zünden der in dem Behälter (104) befindlichen Probe (106),
wobei die Rühreinrichtung (108) insbesondere fest an dem Deckel (102) befestigt ist.

15. Verfahren eines Durchführens eines Flammpunktbestimmungstests und/oder Brennpunktbestimmungstests einer in einem Behälter (104) aufgenommenen zu untersuchenden Probe (106), wobei ein Deckel (102) zum Verschließen des Behälters (104) und eine Rührvorrichtung (100) zum Rühren der Probe (106) in dem Behälter (104) vorgesehen sind, wobei das Verfahren ein Verfahren zum Rühren der Probe (106) in dem mittels des Deckels (102) verschlossenen Behälter (104) aufweist, wobei das Verfahren zum Rühren der Probe (106) aufweist:
zumindest teilweises Hindurchführen einer Rühreinrichtung (108) durch den Deckel (102) hinein in die Probe (106) in dem Behälter (104) zum Rühren der Probe (106);
Antreiben, insbesondere Drehantreiben, der Rühreinrichtung (108) mittels einer zumindest teilweise außerhalb des Deckels (102) angeordneten Antriebseinrichtung (110) zum Rühren der Probe (106) mittels der Rühreinrichtung (108);
Kuppeln der Rühreinrichtung (108) mit der Antriebseinrichtung (110) mittels einer Kupplungseinrichtung (112); und wobei das Verfahren **dadurch gekennzeichnet ist, dass** es ein Betätigen einer Betätigungseinrichtung (114) aufweist, insbesondere zum Einstellen der Kupplungseinrichtung (112), derart, dass selektiv:
in einer ersten Betätigungsstellung (197) bei Hochziehen der Antriebseinrichtung (110) der Deckel (102) gemeinsam mit der Rühreinrichtung (108) von dem Behälter (104) abgenommen wird; oder
in einer zweiten Betätigungsstellung (199) bei Hochziehen der Antriebseinrichtung (110) die Antriebseinrichtung (110) von dem Behälter (104) abgenommen wird und die Rühreinrichtung (108) und der Deckel (102) an dem Behälter (104) verbleiben,
wobei das Verfahren insbesondere ein einhändiges Betätigen der Betätigungseinrichtung (114) zum Einstellen der Kupplungseinrichtung (112) durch einen Benutzer aufweist.

## Claims

1. A flash point determination apparatus (140), in particular also configured for a combustion point determination, the flash point determination apparatus (140) comprising:
a container (104) for receiving a sample (106) to be examined;
a lid (102) for closing the container (104); and
a stirring device (100) for stirring the sample (106) in the container (104), which can be closed by means of the lid (102), for a flash point determination test and/or a combustion point determination test, the stirring device (100) comprising:
a stirring unit (108), which can extend at least partially through the lid (102) for stirring the sample (106) located in the container (104);
a drive unit (110) to be arranged at least partially outside the lid (102) for driving, in particular rotationally driving, the stirring unit (108);
a coupling unit (112) for coupling the stirring unit (108) to the drive unit (110); and
an actuating unit (114), which can be actuated for adjusting the coupling unit (112) in such a way that selectively:
in a first actuating position (197), when the drive unit (110) is pulled up, the lid (102) can be removed from the container (104) together with the stirring unit (108); or
in a second actuating position (199), when the drive unit (110) is pulled up, the drive unit (110) can be removed from the container (104) and the stirring unit (108) and the lid (102) remain on the container (104).

2. The flash point determination apparatus (140) according to claim 1, wherein the coupling unit (112) comprises a first component (116) assigned to the drive unit (110), in particular a first component connected to the drive unit (110) or a first component formed integrally with the drive unit (110), and a second component (118) assigned to the stirring unit (108), in particular a second component connected to the stirring unit (108) or a second component formed integrally with the stirring unit (108).

3. The flash point determination apparatus (140) according to claim 2, wherein the coupling unit (112) comprises at least one first locking body (120), in particular at least one first locking ball and further in particular a first row of locking balls, wherein the at least one first locking body (120) locks the first component (116) to the second component (118), in particular in a torque-transmitting manner, when the actuating unit (114) acts on the at least one first locking body (120) in the first actuating position (197),
wherein the at least one first locking body (120) leaves the first component (116) and the second component (118) in particular unlocked when the actuating unit (114) is in the second actuating position (199) and releases the at least one first locking body (120).

4. The flash point determination apparatus (140) according to one of the claims 2 or 3, wherein the coupling unit (112) comprises a driver (126) for selectively transmitting torque between the first component (116) and the second component (118), wherein in particular the driver (126) is provided separately from the stirring unit (108) and the drive unit (110).

5. The flash point determination apparatus (140) according to claim 4, wherein the coupling unit (112) comprises at least one second locking body (122), in particular at least one second locking ball and further in particular a second row of locking balls, wherein the at least one second locking body (122) acts on the driver (126), in particular in a torque-transmitting manner, when the actuating unit (114) acts on the at least one second locking body (122) in the second actuating position (199),
wherein the at least one second locking body (122) in particular does not act on the driver (126) when the actuating unit (114) is in the first actuating position (197) and releases the at least one second locking body (122).

6. The flash point determination apparatus (140) according to one of the claims 2 to 5, wherein the second component (118) comprises a tapering outer profile (128) and the first component (116) comprises a tapering inner profile (130) for receiving the tapering outer profile (128),
wherein the tapering outer profile (128) in particular comprises a, further in particular circumferential, recess (132) for receiving the at least one first locking body (120).

7. The flash point determination apparatus (140) according to claim 6, wherein the tapering inner profile (130) comprises a, in particular circumferential, recess (134) for receiving the at least one second locking body (122).

8. The flash point determination apparatus (140) according to one of the claims 4 to 7, wherein the second component (118) comprises a central recess (136) for receiving at least a part of the driver (126).

9. The flash point determination apparatus (140) according to one of the claims 1 to 8, wherein the actuating unit (114) comprises a sleeve (138) at least partially surrounding the coupling unit (112), in particular additionally at least partially surrounding the stirring unit (108) and/or the drive unit (110),
wherein the sleeve (138) is configured to be in particular axially displaceable for transferring between the first actuating position (197) and the second actuating position (199), further in particular such that the sleeve (138) is to be displaced away from the stirring unit (108) for transferring from the first actuating position (197) into the second actuating position (199) and towards the stirring unit (108) for transferring from the second actuating position (199) into the first actuating position (197).

10. The flash point determination apparatus (140) according to claim 9, wherein the sleeve (138) comprises at least one inner projection (195) for acting on the at least one first locking body (120) and/or the at least one second locking body (122) and/or the coupling unit (112).

11. The flash point determination apparatus (140) according to claim 2, wherein the coupling unit (112) comprises at least one locking body (124), in particular to which a pretensioning force can be applied, for locking the first component (116) to the second component (118), in particular in a torque-transmitting manner;
wherein the actuating unit (114) comprises at least one actuating element (150), in particular at least one actuating screw, wherein the at least one actuating element (150) is configured to lock the at least one locking body (124) by attaching the at least one locking body (124) to at least one of the first component (116) and the second component (118) in the first actuating position (197) and to unlock the at least one locking body (124) by removing the at least one locking body (124) from the first component (116) and/or the second component (118) in the second actuating position (197).

12. The flash point determination apparatus (140) according to claim 2, wherein the actuating unit (114) comprises a locking unit (153) which, in particular manually by a user or alternatively in an automated manner, can optionally be brought into the first actuating position (197) or into the second actuating position (199), in particular can be displaced between the first actuating position (197) and the second actuating position (199).

13. The flash point determination apparatus (140) according to one of the claims 1 to 12, wherein the coupling unit (112) and the actuating unit (114) are configured to interact with one another in such a way that:
both in the first actuating position (197) and in the second actuating position (199), a transmission of torque from the drive unit (110) to the stirring unit (108) is made possible; and in the first actuating position (197), the drive unit (110) and the stirring unit (108) are coupled to one another axially non-removably from one another and in the second actuating position (199), the drive unit (110) and the stirring unit (108) are decoupled from one another axially removably.

14. The flash point determination apparatus (140) according to one of the preceding claims, comprising:
a tempering unit (142) for tempering the sample (106) located in the container (104); and/or
an ignition device (144) for igniting the sample (106) located in the container (104),
wherein the stirring unit (108) is in particular fixedly attached to the lid (102).

15. A method of carrying out a flash point determination test and/or a combustion point determination test of a sample (106) to be examined received in a container (104), wherein a lid (102) for closing the container (104) and a stirring device (100) for stirring the sample (106) in the container (104) are provided, wherein the method comprises a method for stirring the sample (106) in the container (104) closed by means of the lid (102), wherein the method for stirring the sample (106) comprises:
at least partially guiding a stirring unit (108) through the lid (102) into the sample (106) in the container (104) for stirring the sample (106);
driving, in particular rotationally driving, the stirring unit (108) by means of a drive unit (110) arranged at least partially outside the lid (102) for stirring the sample (106) by means of the stirring unit (108);
coupling the stirring unit (108) to the drive unit (110) by means of a coupling unit (112); and wherein the method is **characterized in that** it comprises
actuating an actuating unit (114), in particular for adjusting the coupling unit (112), in such a way that selectively:
in a first actuating position (197), when the drive unit (110) is pulled up, the lid (102) is removed from the container (104) together with the stirring unit (108); or
in a second actuating position (199), when the drive unit (110) is pulled up, the drive unit (110) is removed from the container (104) and the stirring unit (108) and the lid (102) remain on the container (104),
wherein the method comprises in particular a one-handed actuation of the actuating unit (114) for adjusting the coupling unit (112) by a user.

## Revendications

1. Appareil de détermination de point d'éclair (140), en particulier également conçu pour la détermination du point focal, dans lequel l'appareil de détermination de point d'éclair (140) présente :
un récipient (104) permettant d'accueillir un échantillon à examiner (106) ;
un couvercle (102) permettant de fermer le récipient (104) ; et un dispositif d'agitation (100) permettant d'agiter l'échantillon (106) dans le récipient (104) pouvant être fermé au moyen du couvercle (102), en vue d'un test de détermination de point d'éclair et/ou d'un test de détermination de point focal, dans lequel le dispositif d'agitation (100) présente :
un dispositif d'agitation (108) pouvant s'étendre au moins partiellement à travers le couvercle (102) afin d'agiter l'échantillon (106) se trouvant dans le récipient (104) ;
un dispositif d'entraînement (110) à placer au moins partiellement à l'extérieur du couvercle (102) et permettant d'entraîner, en particulier d'entraîner en rotation, le dispositif d'agitation (108) ;
un dispositif de couplage (112) permettant de coupler le dispositif d'agitation (108) au dispositif d'entraînement (110) ; et dans lequel l'appareil de détermination de point d'éclair est **caractérisé en ce qu'**il
présente un dispositif d'actionnement (114) pouvant être actionné afin de régler le dispositif de couplage (112) de telle sorte que, de manière sélective :
dans une première position d'actionnement (197), lorsque le dispositif d'entraînement (110) est soulevé, le couvercle (102) peut être retiré du récipient (104) en même temps que le dispositif d'agitation (108) ; ou
dans une deuxième position d'actionnement (199), lorsque le dispositif d'entraînement (110) est soulevé, le dispositif d'entraînement (110) peut être retiré du récipient (104) et le dispositif d'agitation (108) et le couvercle (102) restent sur le récipient (104).

2. Appareil de détermination de point d'éclair (140) selon la revendication 1, dans lequel le dispositif de couplage (112) présente un premier composant (116) associé au dispositif d'entraînement (110), en particulier un premier composant relié au dispositif d'entraînement (110) ou formé d'un seul tenant avec le dispositif d'entraînement (110), et un deuxième composant (118) associé au dispositif d'agitation (108), en particulier un deuxième composant relié au dispositif d'agitation (108) ou formé d'un seul tenant avec le dispositif d'agitation (108).

3. Appareil de détermination de point d'éclair (140) selon la revendication 2, dans lequel le dispositif de couplage (112) présente au moins un premier corps de verrouillage (120), en particulier au moins une première bille de verrouillage et en outre en particulier une première série de billes de verrouillage, dans lequel le au moins un premier corps de verrouillage (120) verrouille le premier composant (116) avec le deuxième composant (118), en particulier en transmettant un couple, lorsque le dispositif d'actionnement (114) agit sur le au moins un premier corps de verrouillage (120) dans la première position d'actionnement (197),
dans lequel le au moins un premier corps de verrouillage (120) laisse le premier composant (116) et le deuxième composant (118) en particulier déverrouillés lorsque le dispositif d'actionnement (114) se trouve dans la deuxième position d'actionnement (199) et libère le au moins un premier corps de verrouillage (120).

4. Appareil de détermination de point d'éclair (140) selon l'une quelconque des revendications 2 ou 3, dans lequel le dispositif de couplage (112) présente un élément d'entraînement (126) permettant de transmettre de manière sélective un couple entre le premier composant (116) et le deuxième composant (118), dans lequel en particulier l'élément d'entraînement (126) est fourni séparément du dispositif d'agitation (108) et du dispositif d'entraînement (110).

5. Appareil de détermination de point d'éclair (140) selon la revendication 4, dans lequel le dispositif de couplage (112) présente au moins un deuxième corps de verrouillage (122), en particulier au moins une deuxième bille de verrouillage et en outre en particulier une deuxième rangée de billes de verrouillage, dans lequel le au moins un deuxième corps de verrouillage (122) agit sur l'élément d'entraînement (126), en particulier en transmettant un couple, lorsque le dispositif d'actionnement (114) agit sur le au moins un deuxième corps de verrouillage (122) dans la deuxième position d'actionnement (199), dans lequel le au moins un deuxième corps de verrouillage (122) n'agit en particulier pas sur l'élément d'entraînement (126), lorsque le dispositif d'actionnement (114) est dans la première position d'actionnement (197) et libère le au moins un deuxième corps de verrouillage (122).

6. Appareil de détermination de point d'éclair (140) selon l'une quelconque des revendications 2 à 5, dans lequel le deuxième composant (118) présente un profil extérieur effilé (128) et le premier composant (116) présente un profil intérieur effilé (130) permettant d'accueillir le profil extérieur effilé (128), dans lequel le profil extérieur effilé (128) présente en particulier une cavité (132), de manière supplémentaire en particulier périphérique, permettant d'accueillir le au moins un premier corps de verrouillage (120).

7. Appareil de détermination de point d'éclair (140) selon la revendication 6, dans lequel le profil intérieur effilé (130) présente une cavité (134), en particulier périphérique, permettant d'accueillir le au moins un deuxième corps de verrouillage (122).

8. Appareil de détermination de point d'éclair (140) selon l'une quelconque des revendications 4 à 7, dans lequel le deuxième composant (118) présente un évidement central (136) permettant d'accueillir au moins une partie de l'élément d'entraînement (126).

9. Appareil de détermination de point d'éclair (140) selon l'une quelconque des revendications 1 à 8, dans lequel le dispositif d'actionnement (114) présente un manchon (138) entourant au moins partiellement le dispositif de couplage (112), en particulier entourant en outre au moins partiellement le dispositif d'agitation (108) et/ou le dispositif d'entraînement (110),
dans lequel le manchon (138) est conçu de manière à pouvoir être déplacé en particulier de manière axiale en vue d'un transfert entre la première position d'actionnement (197) et la deuxième position d'actionnement (199), en outre de telle manière que le manchon (138) doit être éloigné du dispositif d'agitation (108) en vue du transfert entre la première position d'actionnement (197) et la deuxième position d'actionnement (199) et doit être rapproché du dispositif d'agitation (108) en vue du transfert entre la deuxième position d'actionnement (199) et la première position d'actionnement (197).

10. Appareil de détermination de point d'éclair (140) selon la revendication 9, dans lequel le manchon (138) présente au moins une saillie intérieure (195) permettant d'agir sur le au moins un premier corps de verrouillage (120) et/ou le au moins un deuxième corps de verrouillage (122) et/ou le dispositif de couplage (112).

11. Appareil de détermination de point d'éclair (140) selon la revendication 2, dans lequel le dispositif de couplage (112) présente au moins un corps de verrouillage (124) pouvant en particulier être soumis à une force de précontrainte et permettant de verrouiller le premier composant (116) avec le deuxième composant (118), en particulier en transmettant un couple ;
dans lequel le dispositif d'actionnement (114) présente au moins un élément d'actionnement (150), en particulier au moins une vis d'actionnement, dans lequel le au moins un élément d'actionnement (150) est conçu pour verrouiller le au moins un corps de verrouillage (124) par mise en place du au moins un corps de verrouillage (124) au niveau d'au moins un parmi le premier composant (116) et le deuxième composant (118) dans la première position d'actionnement (197) et pour déverrouiller le au moins un corps de verrouillage (124) par éloignement du au moins un corps de verrouillage (124) par rapport au premier composant (116) et/ou au deuxième composant (118) dans la deuxième position d'actionnement (197).

12. Appareil de détermination de point d'éclair (140) selon la revendication 2, dans lequel le dispositif d'actionnement (114) présente un dispositif de verrouillage (153) pouvant être placé, en particulier manuellement par un utilisateur ou en variante de manière automatisée, au choix dans la première position d'actionnement (197) ou dans la seconde position d'actionnement (199), en particulier pouvant être déplacé entre la première position d'actionnement (197) et la seconde position d'actionnement (199).

13. Appareil de détermination de point d'éclair (140) selon l'une quelconque des revendications 1 à 12, dans lequel le dispositif de couplage (112) et le dispositif d'actionnement (114) sont conçus pour interagir l'un avec l'autre de telle manière que :
dans la première position d'actionnement (197) et dans la deuxième position d'actionnement (199), une transmission du couple du dispositif d'entraînement (110) vers le dispositif d'agitation (108) est rendue possible ; et, dans la première position d'actionnement (197), le dispositif d'entraînement (110) et le dispositif d'agitation (108) sont couplés l'un à l'autre de manière axialement inamovible et, dans la deuxième position d'actionnement (199), le dispositif d'entraînement (110) et le dispositif d'agitation (108) sont découplés l'un de l'autre de manière axialement amovible.

14. Appareil de détermination de point d'éclair (140) selon l'une quelconque des revendications précédentes, comprenant :
un dispositif de régulation de température (142) permettant de réguler la température de l'échantillon (106) se trouvant dans le récipient (104) ; et/ou
un dispositif d'allumage (144) permettant d'allumer l'échantillon (106) se trouvant dans le récipient (104), dans lequel le dispositif d'agitation (108) est en particulier fermement fixé au couvercle (102).

15. Procédé de mise en œuvre d'un test de détermination de point éclair et/ou d'un test de détermination de point focal d'un échantillon à examiner (106) accueilli dans un récipient (104), dans lequel un couvercle (102) permettant de fermer le récipient (104) et un dispositif d'agitation (100) permettant d'agiter l'échantillon (106) sont fournis dans le récipient (104), dans lequel le procédé comprend un procédé permettant d'agiter l'échantillon (106) dans le récipient (104) fermé au moyen du couvercle (102), dans lequel le procédé permettant d'agiter l'échantillon (106) comprend les étapes consistant à :
faire passer au moins partiellement un dispositif d'agitation (108) à travers le couvercle (102) dans l'échantillon (106) situé dans le récipient (104) afin d'agiter l'échantillon (106) ;
entraîner, en particulier entraîner en rotation, le dispositif d'agitation (108) au moyen d'un dispositif d'entraînement (110) agencé au moins partiellement à l'extérieur du couvercle (102) afin d'agiter l'échantillon (106) au moyen du dispositif d'agitation (108) ;
coupler le dispositif d'agitation (108) au dispositif d'entraînement (110) au moyen d'un dispositif de couplage (112) ; et
dans lequel le procédé est **caractérisé en ce qu'**il présente un actionnement d'un dispositif d'actionnement (114), en particulier afin de régler le dispositif de couplage (112), de telle manière que, de manière sélective :
dans une première position d'actionnement (197), lorsque le dispositif d'entraînement (110) est soulevé, le couvercle (102) peut être retiré du récipient (104) en même temps que le dispositif d'agitation (108) ; ou
dans une deuxième position d'actionnement (199), lorsque le dispositif d'entraînement (110) est soulevé, le dispositif d'entraînement (110) peut être retiré du récipient (104) et le dispositif d'agitation (108) et le couvercle (102) restent sur le récipient (104).
dans lequel le procédé présente en particulier un actionnement d'une seule main du dispositif d'actionnement (114) afin que le dispositif de couplage (112) soit réglé par un utilisateur.
